# EUROPÄISCHE PATENTSCHRIFT

(11) **EP 3 702 156 B1**
(45) Veröffentlichungstag und Bekanntmachung des Hinweises auf die Patenterteilung: **14.09.2022**
(21) Anmeldenummer: 20153164.7
(22) Anmeldetag: 22.01.2020
(51) Int. Cl.: B32B 37/12, B32B 37/15

(54) **VERFAHREN ZUR HERSTELLUNG EINER WASSERDAMPFDURCHLÄSSIGEN FLÄCHIGEN VERBUNDFOLIE**
METHOD FOR PRODUCING A WATER VAPOUR-PERMEABLE FLAT COMPOSITE FILM
PROCÉDÉ DE FABRICATION D'UNE FEUILLE COMPOSITE PLANE PERMÉABLE À LA VAPEUR

(30) Priorität: 26.02.2019 DE 102019001343
(43) Veröffentlichungstag der Anmeldung: 02.09.2020
(73) Patentinhaber: EWALD DÖRKEN AG, 58313 Herdecke (DE)
(72) Erfinder: BACHON, Thomas, 40597 Düsseldorf (DE); FLAIG, Ronald, 51373 Leverkusen (DE); Weeke, Dr. Yvonne, 45276 Essen (DE)
(74) Vertreter: Weidener, Jörg Michael

(56) Entgegenhaltungen:
- EP-A1- 3 124 242
- DE-A1- 19 636 691
- DE-A1-102006 044 754
- US-A1- 2004 157 051

## Beschreibung

Die vorliegende Erfindung betrifft ein Verfahren zur Herstellung einer wasserdampfdurchlässigen flächigen Verbundfolie, wobei eine Klebstoffschicht mittels einer Düsenanordnung auf eine Trägerschicht aufgetragen wird und eine monolitische Funktionsschicht auf die Klebstoffschicht, extrudiert wird.

Darüber hinaus betrifft die vorliegende Erfindung das technische Gebiet der Verbundfolien, insbesondere der Bauverbundfolien.

Diffusionsoffene mehrschichtige Verbundfolien sind üblicherweise aus einer diffusionsoffenen Funktionsschicht in Form einer Kunststoffmembran und einem verstärkenden Vlies oder Gewebe aufgebaut. Der Verbund besitzt im Allgemeinen einen zwei- bis vierschichtigen Aufbau, wobei zwei- und dreischichtige Varianten weiter verbreitet sind als vierschichtige. Bei einem zweischichtigen Verbund wird die Membran auf eine Trägerschicht in Form eines Vlieses oder eines Gewebes einseitig aufgebracht, während bei einem dreilagigen Verbund die Membran üblicherweise auf die Ober- und Unterseite des Trägermaterials aufgebracht wird oder die Ober- und Unterseite der Membran jeweils mit einer Trägerschicht beaufschlagt wird. Bei vierlagigen Verbunden werden häufig mehrere Trägerschichten bzw. Verstärkungsgewebe verwendet, so dass vierlagige Verbunde in der Regel nur für Spezialanwendungen, für welche besonders strapazierfähige Verbundfolien benötigt werden, eingesetzt werden.

Gemein ist jedoch üblicherweise allen diffusionsoffenen Mehrschichtverbundfolien dass sie eine wasserdampfdiffusionsoffene Funktionsschicht aufweisen, welche von einer mikroporösen Membran oder einer monolithischen Membran gebildet wird.

Mikroporöse Membranen bestehen zumeist aus einer Folie eines hydrophoben Polymers, wie beispielsweise Polyethylen oder Polypropylen, welches kleine Poren, sogenannte Mikroporen, aufweist. Der Wasserdampftransport durch mikroporöse Membranen vollzieht sich mit Hilfe der sogenannten Knudsendiffusion; die Poren sind dabei derart dimensioniert, dass einzelne Wassermoleküle durch die Poren der Membran diffundieren können, flüssiges Wasser unter Normalbedingungen bis zu einer Wassersäule von 20 m die Membran jedoch nicht durchdringen kann.

Nachteilig an der Verwendung mikroporöser Membranen ist jedoch, dass sich bei einer veränderten Oberflächenspannung des Wassers, beispielsweise durch Verunreinigungen, die maximale Wassersäule, bis zu welcher ein Schutz gegen den Durchtritt flüssigen Wassers gewährleistet ist, gleichfalls verändert. Unter ungünstigen Bedingungen, insbesondere bei Anwesenheit von Netzmitteln, wie beispielsweise Tensiden, geht die Wassersäule gegen Null, das heißt es ist kein Schutz mehr gegenüber flüssigem Wasser gegeben.

Monolithische Membranen zeigen dieses problematische Verhalten nicht, da sie keine Poren aufweisen. Der Wasserdampftransport durch die monolithischen Membranen vollzieht sich nach einem gänzlich anders gearteten vierstufigen Mechanismus:
1. Adsorption, d. h. Aufnahme und physikalische Bindung der Wassermoleküle an die Membranoberfläche,
2. Absorption, d. h. Eindringen der Wassermoleküle in Membranen,
3. Diffusion, d. h. Transport der Wassermoleküle durch die Membran und
4. Desorption, d. h. Abgabe der Wassermoleküle in den Gasraum.

Voraussetzung für die Diffusion, d. h. den Transport der Wassermoleküle durch die Membran, ist jedoch ein Konzentrationsgefälle des Wassers zwischen den Oberflächen der Membran, so dass die Wassermoleküle von der höher konzentrierten Seite zu der niedriger konzentrierten Seite wandern.

Monolithische Membranen werden im Baubereich insbesondere zur Herstellung zweilagiger Verbundfolien - aufweisend eine Trägerschicht, insbesondere ein Vlies, und eine darauf aufgebrachte Funktionsschicht, in Form der monolithischen Membran - verwendet. Die monolithische Membran besteht dabei üblicherweise aus thermoplastischem Polyurethan (TPU), Polyether-Ester-Elastomeren oder Polyamiden.

Die Folien werden in der Regel derart verwendet, dass die Funktionsschicht, d. h. die monolithische Membran, der Bewitterung ausgesetzt ist. Wie zuvor bereits ausgeführt, hat die Folie die Aufgabe, die unterliegende Konstruktion, insbesondere eine Fassade oder eine Dachkonstruktion, vor Feuchtigkeit, beispielsweise durch Kondensat unterhalb einer Dacheindeckung, Flugschnee und Schmutz zu schützen. Für diese Schutzfunktion ist es jedoch unabdingbar, dass die Membran weder durch äußere mechanische Einflüsse noch durch ausgedehnte Freibewitterung, extreme Temperaturen, Mikroorganismen, Hydrolyse oder durch Korrosion auslösende Medien angegriffen oder zerstört wird.

Insbesondere die Permeationsvorgänge, d. h. der Wasserdampftransport durch die Membran verläuft bei monolithischen Membranen nur dann unproblematisch, wenn,
- ein gemäßigtes Klima vorliegt,
- die Freibewitterungszeit auf maximal 12 Wochen limitiert ist,
- das Wasser nicht durch spezifische Lösungsmittel, Netzmittel, Holzschutzmittel, stark oxidierende Flüssigkeiten, wie sie z. B. zur Schimmelbekämpfung eingesetzt werden, Säuren oder Laugen verunreinigt ist und,
- die Vorschädigung der Membran durch mechanische Schädigung, wie z. B. Abrieb, UV-Bestrahlung, Wärme oder Wassereintrag in die Dachkonstruktion moderat ist.

Sind diese Voraussetzungen nicht gegeben, ist die Funktion der Membran deutlich eingeschränkt und ein dauerhafter Schutz, insbesondere von Dachkonstruktionen, vor Feuchtigkeit kann oftmals nicht mehr gewährleistet werden.

Monolithische Membranen für Bauverbundfolien sollten somit nach Möglichkeit möglichst unempfindlich gegenüber Freibewitterung, Chemikalien und mechanischer Beschädigung sein.

Ein weit verbreitetes Material für Verbundfolien im Baubereich sind thermoplastische Polyurethane, welche eine Vielzahl von positiven Eigenschaften aufweisen. Insbesondere bilden thermoplastische Polyurethane monolithische diffusionsoffene Membranen. Darüber hinaus ist die Vielzahl der bekannten und technisch verwendeten thermoplastischen Polyurethane mechanisch widerstandsfähig und weist insbesondere inhärent flammenhemmende Eigenschaften auf.

Andererseits zeigen viele thermoplastische Polyurethane ein nur unzureichendes Bewitterungsverhalten oder sind äußerst kostenintensiv in der Herstellung.

Aus der EP 3 124 242 B1 ist ein Verfahren und eine Vorrichtung zur Herstellung einer wasserdampfdurchlässigen flächigen Bahn bekannt. Nachteilig an dem durch die EP 3 124 242 bekannten Verfahren ist, dass die wasserdampfdurchlässige Bahn einen vergleichsweise hohen sd-Wert aufweist und somit die für den Einsatzzweck als Bauverbundfolie benötigte Wasserdampfdurchlässigkeit wenn überhaupt nur ausreichend bis mangelhaft sicherstellen kann.

Des Weiteren ist festgestellt worden, dass sich die Verbundhaftung zwischen den einzelnen Lagen bei einer nach dem Verfahren der EP 3 124 242 hergestellten Bahn bei Alterung bzw. nach einer gewissen Benutzungsdauer reduzieren kann.

Es besteht somit Bedarf an einer Verbundfolie bzw. an einem Verfahren zur Herstellung einer Verbundfolie, insbesondere für den Baubereich, welche sowohl wasserdicht als auch hinreichend wasserdampfdiffussionsoffen ist, und gegenüber den bekannten Verbundfolien deutlich verbesserte Eigenschaften aufweist.

Die DE 196 36 691 A1 betrifft eine mehrschichtige Folie, bestehend aus einer gummielastischen ersten Schicht aus einem thermoplastischen Material und aus einer mit der ersten Schicht an zueinander beabstandeten Verbindungsstellen verbundenen zweiten Schicht.

Die EP 3 124 242 A1 betrifft ein Verfahren zur Herstellung einer wasserdampdurchlässigen flächigen Bahn.

Die US 2004/0157051 A1 betrifft ein Verfahren zur Herstellung eines Folienmaterials.

Die DE 10 2006 044 754 A1 betrifft eine Bahn mit wenigstens einem Befestigungsabschnitt zum Verkleben der Bahn mit einem Untergrund oder zum Verkleben mit einer weiteren Bahn.

Aufgabe der vorliegenden Erfindung ist es, die zuvor geschilderten Probleme und Nachteile des Standes der Technik zu überwinden.

Erfindungsgemäß wird die vorgenannte Aufgabe bei einem Verfahren der eingangs genannten Art dadurch gelöst, dass die Klebstoffschicht mittels einer Mehrzahl von in Längsrichtung der Trägerschicht verlaufenden Längsstreifen von der Düsenanordnung aufgebracht wird. Dabei sind benachbarte Längsstreifen voneinander beabstandet.

Die Funktionsschicht wird, vorzugsweise direkt, auf die Klebstoffschicht extrudiert.

Zusätzlich kann vorgesehen sein, dass die Funktionsschicht auf eine Walze (insbesondere eine zweite - später noch erläuterte - Walze) und/oder in einen Walzenspalt extrudiert wird.

Die Längsrichtung der Trägerschicht erstreckt sich erfindungsgemäß zumindest im Wesentlichen in Förder- bzw. Produktionsrichtung der Verbundfolie und verläuft insbesondere entlang der bzw. parallel zur Längserstreckung der Trägerschicht und/oder der Verbundfolie.

Erfindungsgemäß konnte festgestellt werden, dass durch den Auftrag der Klebstoffschicht in Form von voneinander beabstandeten Längsstreifen eine deutlich verbesserte Wasserdampfdurchlässigkeit im Vergleich zu aus dem Stand der Technik bekannten Verbundfolien erreicht werden kann. Insbesondere kann die Wasserdampfdurchlässigkeit der Verbundfolie um bis zu 70% verbessert werden - das heißt, dass der sd-Wert bei der Erfindung erheblich verringert und variiert werden kann, und zwar in Abhängigkeit des Abstands benachbarter Längsstreifen. Erfindungsgemäß ist festgestellt worden, dass - obwohl ein deutlich verbesserter sd-Wert vorliegt - die Verbundhaftung im Vergleich zu aus dem Stand der Technik bekannten Verbundfolien ebenfalls verbessert und/oder hinreichend gut sichergestellt werden kann. Diese sehr gute Verbundhaftung kann auch nach erheblicher Alterung, insbesondere nach mehreren Monaten bis Jahren sichergestellt werden.

Als Material für die Funktionsschicht ist thermoplastisches Polyurethan vorgesehen.

Ferner weist die durch das erfindungsgemäße Verfahren hergestellte Verbundfolie einen hohen Widerstand gegen das Durchdringen von Wasser auf und ist sowohl alterungs- als auch UV-stabil, insbesondere bei einem Einsatz in der Freibewitterung.

Zudem gelingt es durch das erfindungsgemäße Verfahren auf vergleichsweise einfachem Weg, eine hohe Wasserdampfdurchlässigkeit bei einer gleichzeitigen wasserdichten Ausbildung der Verbundfolie zu erreichen. Des Weiteren ist beim Zustandekommen der Erfindung festgestellt worden, dass durch einen längsstreifenförmigen Auftrag der Klebstoffschicht bzw. durch eine nicht vollständig durchgehende Klebstoffschicht die Wasserdampfdurchlässigkeit der Verbundfolie verbessert werden kann. Insbesondere ist beim Zustandekommen der Erfindung im Zusammenhang mit durchgeführten Versuchen festgestellt worden, dass letztlich die Klebstoffschicht die Wasserdampfdurchlässigkeit der Verbundfolie herabsetzt. Es ist somit wünschenswert, die Klebstoffschicht lediglich bereichsweise auf der Trägerschicht vorzusehen. Erfindungsgemäß gelingt dies sehr einfach durch die streifenweise bzw. streifenförmige Aufbringung der Klebstoffschicht.

Die Ausbildung bzw. Anordnung der Längsstreifen der Klebstoffschicht ist erfindungsgemäß insbesondere derart zu verstehen, dass diese streifenförmig, punktförmig und/oder rasterförmig ausgebildet sein können, so dass sich ein bereichsweiser Auftrag der Klebstoffschicht auf der Trägerschicht ergibt, der durch die Düsenanordnung aufgebracht wird. Dabei können die Längsstreifen durchgehend und/oder segmentartig ausgebildet sein. Letztlich kann grundsätzlich auch die Form eines Punktmusters und/oder eines Rasters der Klebstoffschicht auf der Trägerschicht vorgesehen sein. Die Düsenanordnung ist dabei konstruktiv derart ausgebildet, dass Längsstreifen erzeugt werden können.

Insbesondere gelingt es erfindungsgemäß, die mit dem Klebstoff überdeckte Fläche der Trägerschicht möglichst gering bzw. klein zu halten und gleichzeitig eine gute Verbundhaftung der Trägerschicht und der Funktionsschicht zu ermöglichen und außerdem einen hohen sd-Wert zu erhalten.

Bei einer besonders bevorzugten Ausgestaltung des erfindungsgemäßen Verfahrens wird auf die der Trägerschicht abgewandten Seite der Funktionsschicht eine weitere Trägerschicht aufgebracht. Die Funktionsschicht und die weitere Trägerschicht werden mittels einer weiteren Klebstoffschicht miteinander, insbesondere fest, verbunden. Die weitere Klebstoffschicht kann - wie die Klebschicht - mittels einer Mehrzahl von in Längsrichtung der Trägerschicht - das heißt in Förderrichtung - verlaufenden Längsstreifen von einer weiteren Düsenanordnung aufgebracht werden. Insbesondere erfolgt zunächst die Aufbringung der weiteren Klebstoffschicht und anschließend die Verbindung und/oder Verklebung mit der weiteren Trägerschicht.

Die weitere Klebstoffschicht kann auf die der Trägerschicht abgewandten Seite der Funktionsschicht und/oder auf die weitere Trägerschicht aufgebracht werden.

Durch den vorgenannten Verfahrensschritt bzw. die Verfahrensschritte gelingt es, dass die Funktionsschicht beidseitig von einer, vorzugsweise als Trägervlies ausgebildeten, Trägerschicht umgeben ist. Die Funktionsschicht der Verbundfolie wird somit durch die Trägerschichten geschützt. Die weitere Trägerschicht kann mit der Funktionsschicht nach oder vor Verpressen der Funktionsschicht und der Trägerschicht mit dem bereits erstellten Trägerverbund verbunden, insbesondere verpresst, werden.

Alternativ oder zusätzlich ist es möglich, dass die weitere Trägerschicht als Gitter, Trägervlies und/oder Schutzfolie ausgebildet ist.

Vorzugsweise wird die Düsenanordnung und/oder die weitere Düsenanordnung während des Aufbringens der Längsstreifen quer zur Längsrichtung, insbesondere quer zur Förderrichtung der herzustellenden Bahn, der Trägerschicht hin- und her bewegt. Durch die letztlich insbesondere changierende Bewegung der Düsenanordnung und/oder der weiteren Düsenanordnung kann ein zumindest im Wesentlichen ein wellenförmiger Auftrag der Klebstoffschicht ermöglicht werden.

Ein derartiger Auftrag der Klebstoffschicht ist besonders vorteilhaft, da hierdurch die Haptik und/oder die Nagelausreißfestigkeit der Bahn nicht durch die Applikation einer Klebstoffschicht herabgesetzt wird. Letztlich kann vermieden werden, dass an gleichen Stellen an der Oberfläche der fertig hergestellten Verbundfolie Erhöhungen auftreten, die letztlich die Haptik herabsetzen. Darüber hinaus ist auch die Klebstoffschicht stets in unterschiedlichen Bereichen auf der Oberfläche der Trägerschicht angeordnet, so dass letztlich nicht "vorbestimmt" bzw. festgelegt ist, an welchen Stellen der Bahn die Klebstoffschicht vorhanden ist. Dies kommt letztlich der Nagelausreißfestigkeit bzw. der Nageldichtigkeit zugute.

Bei einer weiteren ganz besonders bevorzugten Ausführungsform ist vorgesehen, dass der Klebstoff der Klebstoffschicht und/oder der weiteren Klebstoffschicht aufgeschäumt wird, vorzugsweise mittels eines Treibmittels, insbesondere Kohlenstoffdioxid. Vorzugsweise ist ein physikalisches und/oder chemisches Treibmittel zur Aufschäumung der Klebstoffschicht und/oder der weiteren Klebstoffschicht vorgesehen. Ein Aufschäumen der Klebstoffschicht kann beim Aufbringen oder nach dem Aufbringen der Klebstoffschicht und/oder der weiteren Klebstoffschicht erfolgen. Letztlich ermöglicht ein Aufschäumen der Klebstoffschicht und/oder der weiteren Klebstoffschicht, dass zumindest bereichsweise Poren in die Klebstoffschicht und/oder die weitere Klebstoffschicht eingebracht werden können. Hierdurch gelingt es insbesondere, die Wasserdampfdurchlässigkeit der hergestellten Verbundfolie zu verbessern. Letztlich kann so eine offenporige Klebstoffschicht und/oder weitere Klebstoffschicht bereitgestellt werden.

Vorzugsweise wird die Oberfläche der Verbundfolie perforiert, bevorzugt durch perforierte Walzen bei einem Verpressvorgang.

Ferner ist bei einer weiteren bevorzugten Ausgestaltung des Erfindungsgedankens vorgesehen, dass die Längsstreifen der Klebstoffschicht und die Längsstreifen der weiteren Klebstoffschicht derart aufgebracht werden, dass sie sich nach Herstellung der Verbundfolie vollständig und/oder zumindest bereichsweise überlappen. Letztlich soll die Überlappung so sein, dass quer zur Bahn (also in Draufsicht gesehen) noch freie Bereiche zwischen den aufgebrachten Längsstreifen beider Schichten verbleiben. Eine derartige Anordnung der Klebstoffschicht und der weiteren Klebstoffschicht ermöglicht insbesondere eine gute Wasserdampfdurchlässigkeit, da so für die gesamte Verbundfolie Bereiche vorgesehen sind, an denen weder die Klebstoffschicht noch die weitere Klebstoffschicht vorhanden sind.

Sofern zwei Klebstoffschichten benötigt werden, ermöglicht die bereichsweise oder zumindest im Wesentlichen vollständige Überlappung, dass ein möglichst großer Freiraum an nicht mit Klebstoff bedeckter Verbundfolie erzeugt werden kann. Insbesondere zeigt sich in diesem Zusammenhang ein changierendes Aufbringen der Klebstoffschicht und/oder der weiteren Klebstoffschicht bzw. ein Hin- und Herbewegen der Düsenanordnung beim Aufbringen der Klebstoffschicht und/oder der weiteren Klebstoffschicht relativ zur Oberfläche der Trägerschicht als vorteilhaft. Hierdurch kann gewährleistet werden, dass sich die weitere Klebstoffschicht gerade nicht in die von der Klebstoffschicht frei gelassenen Flächen, anordnet.

Letztlich wird somit ein netzförmiger Aufbau der Klebstoffschicht und/oder der weiteren Klebstoffschicht - im Querschnitt bzw. in Draufsicht auf die Oberseite der Bahn gesehen - ermöglicht, wobei eine gute Wasserdampfdurchlässigkeit der gesamten Verbundfolie ermöglicht werden kann. In diesem Zusammenhang versteht es sich, dass ein Netzaufbau der Klebstoffschicht und der weiteren Klebstoffschicht nicht zwingend derart auszulegen ist, dass sich die Klebstoffschicht unmittelbar an die weitere Klebstoffschicht angeordnet. Vielmehr ist die Klebstoffschicht durch die gegebenenfalls mehrlagige Funktionsschicht von der weiteren Klebstoffschicht beabstandet bzw. getrennt.

Erfindungsgemäß ist es möglich, dass der Klebstoff der weiteren Klebstoffschicht sich von dem Klebstoff der Klebstoffschicht unterscheidet und/oder die weitere Klebstoffschicht zeitlich nachfolgend und/oder in Verfahrensrichtung bzw. Förderrichtung nachfolgend zu der Klebstoffschicht aufgebracht wird.

Vorzugsweise bewegt sich die weitere Düsenanordnung mit einer anderen Frequenz als die Düsenanordnung hin und her und/oder changiert mit einer anderen Frequenz. Letztlich kann durch verschiedene Frequenzen der Bewegung der Düsenanordnung und der weiteren Düsenanordnung relativ zur Oberfläche der Trägerschicht sichergestellt werden, dass sich die Klebstoffschicht und die weitere Klebstoffschicht nur bereichsweise überlappen, so dass Freiräume der Verbundfolie entstehen, die weder die Klebstoffschicht noch die weitere Klebstoffschicht aufweisen.

Besonders bevorzugt ist vorgesehen, dass die Trägerschicht einer ersten Walze bzw. ersten Walzenanordnung zugeführt wird und/oder dass der Schichtaufbau wenigstens aus der Funktionsschicht, der Klebstoffschicht und der Trägerschicht verpresst wird. Die Verpressung kann in einem Walzenspalt, der durch das Zusammenwirken der ersten Walze und einer zweiten Walze gebildet werden kann, ermöglicht werden.

Ein Verpressen der weiteren Trägerschicht und der weiteren Klebstoffschicht mit dem - noch unverpressten - Schichtaufbau aus wenigstens der Funktionsschicht, der Klebstoffschicht und der Trägerschicht kann gemeinsam mit dem Verpressvorgang des vorgenannten Schichtaufbaus durchgeführt werden.

Alternativ oder zusätzlich kann vorgesehen sein, dass ein weiterer Verpressvorgang erfolgt, in dem die weitere Klebstoffschicht und die weitere Trägerschicht mit dem bereits verpressten Schichtaufbau aus wenigstens der Funktionsschicht, der Klebstoffschicht und der Trägerschicht verpresst werden. Dieser weitere Verpressvorgang kann in einen weiteren Walzenspalt einer weiteren Walzenanordnung ermöglicht werden.

Vorzugsweise ist vorgesehen, dass der verpresste Verbund aus wenigstens der Trägerschicht, der Klebstoffschicht und der Funktionsschicht gekühlt wird. Insbesondere ist ein Kühlvorgang nachfolgend zu dem Verpressen, insbesondere nachfolgend zu dem Verpressvorgang und/oder dem weiteren Verpressvorgang vorgesehen.

Des Weiteren kann eine Corona-Vorbehandlung der Oberfläche der Trägerschicht und/oder weiteren Trägerschicht erfolgen. Insbesondere erfolgt die Corona-Vorbehandlung der Trägerschicht vor der Extrusion der Funktionsschicht und/oder in Förderrichtung vorgelagert zu der Aufbringung der Klebstoffschicht. Die Corona-Vorbehandlung der weiteren Trägerschicht kann insbesondere vor Aufbringung der weiteren Klebstoffschicht erfolgen. Die Corona-Vorbehandlung ermöglicht eine bessere Verbundhaftung der Trägerschicht zu der Klebstoffschicht und/oder der weiteren Trägerschicht zu der weiteren Klebstoffschicht und somit eine bessere Verbundhaftung der einzelnen Schichten der gesamten Verbundfolie.

Letztlich ermöglicht die Corona-Vorbehandlung eine verbesserte Haftung der Klebstoffschichten. Bei der Corona-Vorbehandlung wird die zu behandelnde Oberfläche für eine kurze Zeit einer elektrischen Corona-Entladung ausgesetzt. An der Oberfläche entstehen so polare Moleküle, an die sich beispielsweise die Klebstoffe anbinden können.

Ferner kann bei einer weiteren bevorzugten Ausführungsform vorgesehen sein, dass die, insbesondere als Breitschlitzdüse ausgebildete, Düsenanordnung auf der Trägerschicht aufliegt und/oder zumindest im Wesentlichen in Kontakt mit der Trägerschicht ist, so dass ein "Klebstoffabriss" hervorgerufen wird, insbesondere wodurch ein "aufgerissener" Klebstoffauftrag erfolgt.

Besonders bevorzugt ist vorgesehen, dass ein mehrschichtiger Aufbau der Funktionsschicht erfolgt. Im Rahmen der vorliegenden Erfindung wird somit vorzugsweise die erfindungsgemäße Verbundfolie derart erhalten, dass die Funktionsschicht auf die Trägerschicht extrudiert wird, insbesondere durch Coextrusion. Die mehrlagige Funktionsschicht weist vorzugsweise wenigstens zwei Lagen und/oder drei Lagen auf. Die einzelnen Lagen können durch Extrusion erzeugt werden. Besonders bevorzugt enthalten die Lagen der Funktionsschicht ein thermoplastisches Polyurethan.

Vorzugsweise kann demgemäß eine mehrlagige Extrusion der Funktionsschicht erfolgen, wobei beispielsweise ein Schichtaufbau in Form der Schichten ABA oder ABB erfolgen kann. Letztlich ist dabei vorgesehen, dass die Schichten A und/oder B zumindest im Wesentlichen jeweils baugleich ausgebildet sind. Besonders bevorzugt enthält wenigstens eine Schicht der Funktionsschicht einen Haftvermittler zur verbesserten Verbundhaftung der Schichten der Funktionsschicht.

Optional kann vorgesehen sein, dass sich die Schichten der Funktionsschicht bzw. die Lagen der Funktionsschicht hinsichtlich ihres verwendeten thermoplastischen Polyurethans unterscheiden.

Des Weiteren kann eine wasserdampfdurchlässige flächige Verbundfolie vorgesehen sein. Die Verbundfolie kann insbesondere nach einem Verfahren der vorgenannten Art hergestellt worden sein. Die Verbundfolie weist eine Trägerschicht, eine auf die Trägerschicht aufgebrachte Klebstoffschicht und eine, vorzugweise monolithische, Funktionsschicht auf. Dabei ist vorgesehen, dass die Klebstoffschicht eine Mehrzahl von in Längsrichtung der Verbundfolie verlaufenden Längsstreifen aufweist, wobei benachbarte Längsstreifen voneinander beabstandet sind. Der Abstand benachbarter Streifen sollte zwischen 1 mm und 20 mm liegen, wobei jeder diskrete Einzelwert in dem vorgenannten Intervall möglich ist.

Zur Vermeidung von unnötigen Wiederholungen sei auf die vorherigen Ausführungen verwiesen, die in gleicher Weise auch für die wasserdampfdurchlässige Verbundfolie gelten.

Insbesondere ist vorgesehen, dass die Klebstoffschicht lediglich bereichsweise auf der Oberfläche der Trägerschicht angeordnet ist, so dass sich beim Gesamtaufbau der Verbundfolie - im Querschnitt gesehen - Bereiche ergeben, in denen zumindest im Wesentlichen keine Klebstoffschicht bzw. kein Klebstoff angeordnet ist.

Die Verbundfolie zeichnet sich insbesondere dadurch aus, dass eine im Vergleich zum Stand der Technik deutlich verbesserte Wasserdampfdurchlässigkeit ermöglicht werden kann. Insbesondere kann der sd-Wert zu aus dem Stand der Technik bekannten Verbundfolien bei einer gleichzeitig sehr guten Verbundhaftung der Schichten der Verbundfolie untereinander um bis zu 60% verbessert werden.

Wie zuvor bereits erwähnt, kann erfindungsgemäß auch eine gute Verbundhaftung - und zwar auch nach erheblicher Alterung - gewährleistet werden.

Es gelingt es ferner, eine Verbundfolie mit einer hohen Langzeitbeständigkeit sowie einer sehr guten UV-Stabilität, insbesondere beim Einsatz in der Freibewitterung, bereit zu stellen, die sich ebenso durch einen hohen Widerstand gegen das Durchdringen von Wasser auszeichnet.

Die Verbundfolie ermöglicht beispielsweise die Herstellung von Bauverbundfolien, insbesondere Fassadenbahnen, Unterdeckbahnen und Unterdachbahnen, welche mechanisch widerstandsfähig, stabil gegen Hydrolyse und chemikalienresistent sind.

Vorzugsweise ist wenigstens ein Längsstreifen der Klebstoffschicht parallel zu einem Längsrand der Trägerschicht und/oder als wellenförmig verlaufender und/oder als ununterbrochener oder segmentartiger Streifen ausgebildet. Die Klebschicht kann letztlich streifenförmig, punktförmig und/oder rasterförmig ausgebildet sein. Im Ergebnis ergeben sich aber immer Streifen, die in Längsrichtung der Bahn bzw. der Trägerschicht verlaufen. Letztlich ist ein bereichsweiser Auftrag der Klebstoffschicht auf der Oberfläche der Trägerschicht, insbesondere dem Trägervlies, vorgesehen. Darüber hinaus ist es auch möglich, dass lediglich an den Längsrändern und/oder an wenigstens einem Längsrand der Trägerschicht die Klebstoffschicht aufgebracht wird. Somit kann ein größerer Freiraum - der frei von Klebstoff ist - auf der Trägerschicht gewährleistet werden. Folglich können Bereiche der Trägerschicht - insbesondere im Querschnitt der Folie - mit einem bereichsweisen Auftrag der Klebstoffschicht und weitere Bereiche, die gänzlich frei von der Klebstoffschicht sind, vorgesehen sein.

Bei einer weiteren ganz besonders bevorzugten Ausgestaltung ist vorgesehen, dass die Verbundfolie einen sd-Wert von kleiner oder gleich 0,15 m, bevorzugt kleiner oder gleich 0,1 m, weiter bevorzugt kleiner oder gleich 0,09 m, aufweist. Insbesondere ermöglicht ein sd-Wert in den vorgenannten Bereichen, dass eine sehr gute Wasserdampfdurchlässigkeit der Verbundfolie erreicht werden kann, die sich gerade beim Einsatz als Bauverbundfolie bzw. beim Einsatz in der Bauwirtschaft als vorteilhaft zeigt. Der vorgenannte sd-Wert wird letztlich durch die definierte Breite der Längsstreifen, die bevorzugt zwischen 1 mm und 50 mm liegt und den definierten Abstand benachbarter Längsstreifen, der bevorzugt zwischen 1 mm und 20 mm liegt, erreicht.

Wasserdampfdurchlässige Baufolien werden beispielsweise im Dachbereich eingesetzt, wobei die Wasserdampfdurchlässigkeit ermöglicht, dass Wasserdampf aus dem Inneren eines Gebäudes über die Baufolie austreten kann. Gleichzeitig kann jedoch ein Schutz vor Regen durch die wasserdichte Ausbildung der Verbundfolie ermöglicht werden.

Darüber hinaus kann als Klebstoff für die Klebstoffschicht ein nicht-reaktiver und/oder ein reaktiver, insbesondere Hotmelt, Klebstoff und/oder ein thermoplastischer Klebstoff und/oder ein PUR-Klebstoff vorgesehen sein. Ein reaktiver Klebstoff kann bei der Anwendung mit Luftfeuchtigkeit oder auch bei Erwärmen auf Temperaturen weit oberhalb der Verarbeitungstemperatur zu einem vernetzten Polymer reagieren. Die durch Abkühlung erstarrten reaktiven Klebstoffe, insbesondere die reaktiven Schmelzklebstoffe, erlauben schnelle Produktionsprozesse sowie kurze Füge- und Preßzeiten ohne vorheriges Trocknen des Klebstoffs. Bei einem nichtreaktiven Klebstoff ist insbesondere vorgesehen, dass dieser vor einer Verklebung austrocknet.

Besonders bevorzugt ist vorgesehen, dass die Verbundfolie eine weitere Trägerschicht aufweist. Die weitere Trägerschicht kann auf der der Trägerschicht abgewandten Seite der insbesondere mehrlagigen Funktionsschicht, angeordnet sein. Ferner kann die Trägerschicht auch als Trägervlies ausgebildet sein. Darüber hinaus kann die weitere Trägerschicht mit der Trägerschicht mittels einer weiteren Klebstoffschicht verbunden sein.

Alternativ oder zusätzlich kann vorgesehen sein, dass die weitere Klebstoffschicht eine Mehrzahl von in Längsrichtung der Trägerschicht verlaufenden, zueinander beabstandeten Längsstreifen aufweist. Die Längsstreifen der weiteren Klebstoffschicht können den zuvor genannten Ausbildungen der Längsstreifen der Klebstoffschicht zumindest im Wesentlichen entsprechen. Zur Vermeidung von unnötigen Wiederholungen darf auf die vorherigen Ausführungen verwiesen werden darf. Grundsätzlich ist es auch möglich, dass die weitere Trägerschicht ohne eine weitere Klebstoffschicht mit der Funktionsschicht fest verbunden wird.

Bei einer weiteren bevorzugten Ausgestaltung ist vorgesehen, dass die Längsstreifen der Klebstoffschicht und die Längsstreifen der weiteren Klebstoffschicht sich zumindest bereichsweise oder vollständig überlappen. Letztlich kann eine Überlappung der Streifen der Klebstoffschicht und der weiteren Klebstoffschicht in Bezug auf den Gesamtaufbau der Verbundfolie gesehen werden. Insbesondere kann zwischen der Klebstoffschicht und der weiteren Klebstoffschicht die, vorzugsweise mehrlagige, Funktionsschicht angeordnet sein.

Letztlich ist insbesondere die Anordnung der Klebstoffschicht und der weiteren Klebstoffschicht derart ausgebildet, dass in Querrichtung gesehen, also von der Oberseite der Verbundfolie zu ihrer Unterseite, Freiräume bzw. klebstofffreie Bereiche gebildet werden, die weder die Klebstoffschicht noch die weitere Klebstoffschicht aufweisen. Ein derartiger Aufbau der Verbundfolie ermöglicht insbesondere eine sehr hohe Wasserdampfdurchlässigkeit.

Grundsätzlich kann zur sicheren Gewährleistung von Freiräumen vorgesehen sein, dass sich die Anordnung oder Ausbildung bzw. das Muster der Klebstoffschicht und der weiteren Klebstoffschicht voneinander unterscheidet.

Vorzugsweise weist die Funktionsschicht wenigstens zwei Lagen auf. Ganz besonders bevorzugt ist, dass die erste Lage und/oder die zweite Lage ein thermoplastisches Polyurethan aufweist und/oder daraus besteht.

Darüber hinaus kann durch gezielte Abstimmung der thermoplastischen Polyurethane in der ersten und zweiten Lage die Wasserdampfdurchlässigkeit der mehrlagigen Funktionsschicht, das heißt der zweiten Schicht des Verbundes und somit der Verbundfolie insgesamt gezielt eingestellt werden.

Insbesondere durch die Verwendung unterschiedlicher thermoplastischer Materialien kann ein Konzentrationsgradient für Wasser in der Membran eingestellt werden, welcher den Wasserdampftransport in eine Richtung bevorzugt und befördert, so dass vorzugsweise nur ein Transport von Wasserdampf aus einem Gebäude an die Umgebung erfolgt und nicht umgekehrt.

Weiterhin ist es gleichfalls möglich, besonders witterungsbeständige und UV-strahlungsresistente thermoplastische Polyurethane als äußere Lage, d. h. als Lage, welche der Witterung ausgesetzt ist, zu verwenden. Derartige besonders witterungs- und UV-beständige Polyurethane, beispielsweise Polyurethan des Carbonat-Typs sind sehr kostenintensiv, weshalb ihre Anwendung sich insbesondere in Bauverbundfolien nicht umfassend durchgesetzt hat, sondern auf wenige Spezialanwendungen beschränkt ist. Mit der erfindungsgemäßen Verbundfolie ist es jedoch möglich, nur eine dünne Deckschicht aus den besonders witterungs- und UVbeständigen Polyurethanen herzustellen und darunter eine Schicht aus einem deutlich preiswerteren Material anzuordnen.

Durch die Verwendung von thermoplastischen Polyurethanen mit unterschiedlichen Härten kann darüber hinaus gewährleistet werden, dass insbesondere bei Auftrag der mehrlagigen Folie aus der Schmelze auf das Trägermaterial bzw. die Trägerschicht, beispielsweise durch Coextrusion, verhindert wird, dass Teile des Trägermaterials, insbesondere Filamentfasern bei Verwendung von Vliesen, die monolithische Membran durchdringen bzw. diese beschädigen oder schwächen.

Dies gilt insbesondere für eine Funktionsschicht, bei welcher eine Lage aus thermoplastischem Polyurethan mit geringer Härte zwischen einem thermoplastischen Polyurethan mit größerer Härte und dem Trägermaterial (Trägerschicht) angeordnet ist. In diesem Fall wirkt die weichere Lage aus thermoplastischem Polyurethan als Verbindung bzw. Klebschicht und ermöglicht einen innigen Verbund der einzelnen Materialien.

Durch eine spezifische Abstimmung der verwendeten thermoplastischen Polyurethane ist es darüber hinaus auch möglich, kostengünstige Verbundfolien zu produzieren, welche nicht nur eine besondere mechanische Widerstandsfähigkeit aufweisen, sondern darüber hinaus auch flammenhemmende Eigenschaften besitzen.

Durch gezielt geeignete Materialwahl der ersten Lage und der zweiten Lage aus thermoplastischem Polyurethan kann darüber hinaus auch die Chemikalienbeständigkeit der resultierenden Verbundfolie gezielt eingestellt werden.

Unter einer Schicht oder einer Lage ist im Rahmen der vorliegenden Erfindung ein nahezu zweidimensionales Flächengebilde zu verstehen. Derartige Flächengebilde sind üblicherweise bahnförmig ausgebildet und besitzen somit lediglich zwei Flächen, d. h. die Schichtdicke der jeweiligen Lage, Schicht oder Bahn, ist gegenüber der flächenmäßigen Ausdehnung zu vernachlässigen.

Im Baubereich werden bislang üblicherweise aromatische thermoplastische Polyurethane des Ether-Typs, des Polyester-Typs und des Polyester-Ether-Typs, auch Ester-Ether-Typ genannt, verwendet.

Unter einem thermoplastischen Polyurethan ist im Rahmen der vorliegenden Erfindung ein thermoplastisches Elastomer zu verstehen, welches aus Polyurethan gebildet ist, aufweist.

Thermoplastische Elastomere sind Kunststoffe, die bei Raumtemperatur elastomeres Verhalten, unter Wärmezufuhr jedoch thermoplastisches Verhalten zeigen. Ein besonderer Vorteil von thermoplastischen Elastomeren ist, dass die im Vergleich zu reinen Elastomeren durch Wärmeeinfluss jederzeit reversibel umgeformt werden können.

Thermoplastische Polyurethane sind Polyurethane, welche ein Hartsegment und ein Weichsegment aufweisen, wobei das Weichsegment üblicherweise durch ein oligomeres oder polymeres Polyol gebildet ist und das Hartsegment aus einem Diisocyanat, welches als Kettenverlängerer kurzkettige Diole aufweist.

Als Kettenverlängerer werden insbesondere kurzkettige bifunktionale Stoffe, insbesondere Diol, eingesetzt, deren Molekulargewicht üblicherweise zwischen 18 und 350 g/mol beträgt. Bevorzugt werden kurzkettige Diole als Kettenverlängerer eingesetzt. Üblicherweise handelt es sich bei den Kettenverlängerern um zweiwertige Alkohole, insbesondere ausgewählt aus der Gruppe von 1,2-Ethandiol, 1,2-Propandiol, 1,4-Butandiol, 2,3-Butandiol, 1,5-Pentandiol, 1,6-Hexandiol, 1,8-Octandiol, Diethylenglykol, Triethylenglykol, Tetraethylenglykol und höhere Oligoethylenglykole, Dipropylenglykol und höhere Oligopropylenglykole, Dibutylenglykol, höhere Oligoethylenglykole sowie deren Mischungen.

Im Rahmen der vorliegenden Erfindung ist unter einem aliphatischen oder einem aromatischen Polyurethan ein Polyurethan zu verstehen, dessen Hartsegment aliphatische oder aromatische Diisocyanate enthält bzw. aus diesen durch Umsetzung mit den Kettenverlängerern erhalten wird.

Bei den aromatischen Diisocyanaten handelt es sich vorzugsweise um TDI (Toluol 2,4-diisocyanat), NDI (Naphtylen-1,5-diisocyanat), MDI (Methylendi(phenylisocyanat), PDI (Polymeres Diphenylmethandiisocyanat) oder deren Mischungen.

Aliphatische Diisocyanate werden vorzugsweise ausgewählt aus H12MDI (1-Isocyanato-4-[(4-isocyanotocyclohexyl)methyl]cyclohexan), HDI (1,6-Hexamethylendiisocyanat), IPDI (3-Isocyanatmethyl-3,5,5-trimethylcyclohexylisocyanat), TMXDI (Tetramethylxylydiisocyanat) und CHDI (1,4-Cylcohexyldiisocyanat) sowie deren Mischungen.

Unter einem thermoplastischen Polyurethan vom Ether-Typ bzw. unter einem Ether-TPU ist im Rahmen der vorliegenden Erfindung ein thermoplastisches Polyurethan zu verstehen, dessen Weichsegment aus Polyethern aufgebaut ist. Diese Polyether sind dabei vorzugsweise aus Polyetheralkoholen, insbesondere mit der Hydroxyfunktionalität 2, d. h. aus Diolen erhältlich. Die Polyetheralkohole, insbesondere die Polyetherdiole, sind üblicherweise durch Polymerisation kurzkettiger Precursoren, insbesondere beispielsweise durch anionische Polymerisation mit Alkalihydroxiden, wie beispielsweise Natrium- oder Kaliumhydroxid, oder Alkalialkoholaten, wie Natriummethylat, Natrium- oder Kaliumethylat oder Kaliumisopropylat als Katalysatoren oder durch kationische Polymerisation mit Lewis-Säuren, wie Antimonpentachlorid, Borfluid-Etherat, als Katalysatoren aus einem oder mehreren Alkylenoxiden oder zyklischen Ethern mit bevorzugt 2 bis 4 Kohlenstoffatomen im Alkylenrest erhältlich. Besonders geeignete Verbindungen für die Polymerisation sind beispielsweise Tetrahydrofuran, 1,3-Propylenoxid, 1,2- und 2,3-Butylenoxid, 1,4-Butylenoxid, Ethylenoxid und 1,2-Propylenoxid. Die Alkylenoxide können einzeln, alternierend oder als Mischung bei der Polymerisation eingesetzt werden.

In Abhängigkeit der Anzahl an Kohlenstoffatomen in der Kette zwischen den Etherfunktionalitäten des Alkylenrestes werden die thermoplastischen Ether-Polyurethane unterteilt, wobei C2-Ether-Polyurethane, C3-Ether-Polyurethane und C4-Ether-Polyurethane am weitesten verbreitet sind. C2-Ether-Polyurethane sind beispielsweise erhältlich durch Polymerisation von Ethylenoxid, 1,2-Propylenoxid, 1,2- und 2,3-Butylenoxid. C3-Ether-Polyurethane sind beispielsweise erhältlich durch Polymerisation von 1,3-Propylenoxid. C4-Ether-Polyurethane sind durch Polymerisation von 1,4-Butylenoxid erhältlich.

Unter einem thermoplastischen Polyurethan vom Polyester-Typ bzw. unter einem Polyester-TPU ist im Rahmen der vorliegenden Erfindung ein thermoplastisches Polyurethan zu verstehen, dessen Weichsegment aus Polyesterpolyolen, insbesondere Polyesterdiolen, gebildet wird.

Ein thermoplastisches Polyurethan vom Ether-Ester-Typ bzw. ein Ether-Ester-TPU ist im Rahmen der vorliegenden Erfindung ein Polyurethan, dessen Weichsegment aus Polyethern bzw. Oligoethern und Polyestern gebildet wird.

Ein thermoplastisches Polyurethan vom Carbonat-Typ bzw. ein Carbonat-TPU ist im Rahmen der vorliegenden Erfindung durch ein Polyol, insbesondere Diol, gebildet, welches ein Strukturelement eines Kohlensäurediesters aufweist.

Im Stand der Technik und insbesondere im Baubereich sind eine Vielzahl von thermoplastischen Polyurethanen gebräuchlich, welche zusammengefasst jeweils folgende Eigenschaften aufweisen.

Aromatische Ester-TPUs sowie aromatische Ether-Ester-TPUs sind hydrolyseempfindlich und weisen nur moderate Bewitterungseigenschaften auf. Sie besitzen jedoch eine inhärent flammenhemmende Wirkung sowie gute mechanische Eigenschaften, wie z. B. eine geringe Weitereißfestigkeit und eine hohe Abriebfestigkeit.

Aromatische C4-Ether-TPUs besitzen gleichfalls moderate Bewitterungseigenschaften, sind jedoch nicht hydrolyseempfindlich und weisen inhärent flammenhemmende Eigenschaften auf. Aromatische C4-Ether-TPUs sind häufig in Dachunterspannbahnen anzutreffen.

Aromatische C2- und/oder C3-Ether-TPUs sind die preisgünstigsten thermoplastischen Polyurethane. Sie sind nicht hydrolyseempfindlich und besitzen inhärent flammenhemmende Wirkung. Die Bewitterungseigenschaften sind jedoch nicht zufriedenstellend, so dass Baufolien für Außenanwendungen in der Regel nicht auf Basis von C2- bzw. C3-Ether-TPUs ausgebildet werden.

Aromatische Carbonat-TPUs besitzen eine exzellente inhärente flammenhemmende Wirkung sowie eine sehr gute Bewitterungsstabilität und sind darüber hinaus im hohen Maße hydrolyse- und warmlagerungsbeständig. Allerdings sind aromatische Carbonat-TPUs kostenintensiv in der Herstellung, weshalb sie bislang nur vereinzelt in Spezialanwendungen zum Einsatz kommen.

Aliphatische TPUs schließlich besitzen eine exzellente Bewitterungsbeständigkeit und vergilben nicht unter Lichteinfluss. Sie weisen jedoch keine inhärent flammenhemmende Wirkung auf, haben eine hohe Quellneigung bei Wasseraufnahme und sind darüber hinaus extrem kostenintensiv. Aufgrund dieser Nachteile werden aliphatische TPUs im Baubereich nahezu nicht eingesetzt.

Insbesondere bei Verwendung von Mehrschichtverbundfolien, welche mindestens zwei Lagen aus thermoplastischen Polyurethanen aufweisen, können die Materialeigenschaften der vorgenannten thermoplastischen Polyurethane derart ergänzt werden, dass die Vorteile der einzelnen thermoplastischen Polyurethane beibehalten werden und sich sogar ergänzen, während Nachteile gezielt ausgeglichen werden können.

Im Rahmen der vorliegenden Erfindung werden vorzugsweise die Lagen der mehrlagigen Funktionsschicht, insbesondere der mehrlagigen Folie, oftmals auch durch die Schichtaufbauten AB, ABC oder ABA gekennzeichnet, wobei in diesem Fall A üblicherweise die erste Lage enthaltend ein thermoplastisches Polyurethan und B die zweite Lage enthaltend ein thermoplastisches Polyurethan kennzeichnet. Die Lage C ist dann üblicherweise eine dritte Lage, aus einem thermoplastischen Polyurethan, deren thermoplastische Polyurethan von der Schicht B verschieden ist und entweder der Schicht A entspricht, so dass sich als Spezialfall des Schichtaufbaus ABC die Schichtfolge ABA ergibt, oder ein drittes thermoplastisches Polyurethan darstellt, so dass sich eine Schichtabfolge ABC mit drei Lagen aus jeweils unterschiedlichen thermoplastischen Polyurethanen ergibt.

Im Rahmen der vorliegenden Erfindung ist es üblicherweise vorgesehen, dass das thermoplastische Polyurethan ausgewählt ist aus aliphatischen und aromatischen Polyurethanen des Ether-Typs, des Polyester-Typs, des Ether-Polyester-Typs und des Carbonat-Typs. Besonders gute Ergebnisse werden in diesem Zusammenhang erhalten, wenn das thermoplastische Polyurethan ausgewählt ist aus aromatischen Polyurethanen des Ether-Typs, des Polyester-Typs, des Ether-Polyester-Typs und des Carbonat-Typs. Insbesondere durch gezielte Kombination von aromatischen Polyurethanen können wasserdichte aber diffusionsoffene monolithische Membranen bereitgestellt werden, welche hervorragende Bewitterungseigenschaften aufweisen, mechanisch widerstandsfähig und chemikalienresistent sind sowie eine flammenhemmende Wirkung besitzen und dabei kostengünstig zugänglich sind.

Wenn im Rahmen der vorliegenden Erfindung ein Polyurethan des Ether-Typs eingesetzt wird, so ist das Polyurethan des Ether-Typs üblicherweise ausgewählt aus C2- bis C4-Ether-TPUs, insbesondere C2- und/oder C3-Ether-TPUs oder C4-Ether-TPUs.

Im Rahmen der vorliegenden Erfindung ist es vorzugsweise vorgesehen, dass die erste und die zweite Lage der mehrlagigen Funktionsschicht, insbesondere die erste Lage A und die zweite Lage B, unterschiedliche thermoplastische Polyurethane enthalten. Unter unterschiedlichen thermoplastischen Polyurethanen ist dabei zu verstehen, dass die Lagen unterschiedliche Polyurethanpolymere aufweisen und/oder dass die Lagen unterschiedliche Anteile an Additiven und Füllstoffen bzw. unterschiedliche Additive und Füllstoffe aufweisen, so dass sich die Lagen der mehrlagigen Funktionsschicht (Folie) in ihren chemischen und/oder physikalischen Eigenschaften unterscheiden.

Durch die gezielte Auswahl und die spezifische Kombination von unterschiedlichen thermoplastischen Polyurethanen in den einzelnen Lagen der mehrlagigen Funktionsschicht können die Materialeigenschaften der resultierenden mehrlagigen Funktionsschicht, insbesondere einer monolithischen Funktionsschicht auf Basis von thermoplastischen Polyurethanen, gezielt an die jeweiligen Anwendungseigenschaften angepasst werden. Die Einstellung der Materialeigenschaften der einzelnen Lage der mehrlagigen Funktionsschicht erfolgt dabei durch Auswahl der thermoplastischen Polyurethane und/oder durch Zugabe von Additiven. So können unterschiedliche Materialeigenschaften beispielsweise auch erhalten werden, indem gleiche thermoplastische Polyurethane mit unterschiedlichen Mengen an Additiven, beispielsweise Füllstoffen oder Stabilisatoren, versetzt werden.

Gemäß einer bevorzugten Ausführungsform der vorliegenden Erfindung ist es vorgesehen, dass die erste und die zweite Schicht der mehrlagigen Funktionsschicht aus thermoplastischem Polyurethan bestehen. Im Rahmen der vorliegenden Erfindung bezieht sich ein "Bestehen aus einem thermoplastischen Polyurethan" insbesondere allein auf die Polymerkomponente der jeweiligen Lage der mehrlagigen Funktionsschicht, d. h. die einzelnen Lagen der mehrlagigen Funktionsschichten können neben dem thermoplastischen Polymer in Form eines thermoplastischen Polyurethans noch Additive oder Füllstoffe enthalten.

Im Rahmen der vorliegenden Erfindung ist es somit durch geeignete Materialkombinationen und Auswahl von thermoplastischen Polyurethanen in unterschiedlichen Lagen einer mehrlagigen Funktionsschicht möglich - wie oben bereits dargestellt - die Eigenschaften einer mehrlagigen Funktionsschicht auf Basis von thermoplastischen Polyurethanen auf den jeweiligen Anwendungszweck zuzuschneiden und gegenüber thermoplastischen Funktionsschichten aus einzelnen thermoplastischen Polyurethanen oder auch anderen Polymeren deutlich zu verbessern.

Darüber hinaus kann auf die Verwendung von aufwendig herzustellenden Polymerblends oder Copolymeren, welche thermoplastische Polyurethane enthalten, im Rahmen der vorliegenden Erfindung verzichtet worden, da die Eigenschaften der mehrlagigen Funktionsschicht und damit der Verbundfolie insgesamt gezielt manipuliert und eingestellt werden können.

Besonders gute Ergebnisse werden erhalten, wenn die mehrlagige Funktionsschicht durch Coextrusion, insbesondere durch Mehrschicht-Coextrusion, erhalten ist. Durch Coextrusion, insbesondere Mehrschicht-Coextrusion bzw. Mehrlagen-Coextrusion, wird ein besonders enger Verbund zwischen den einzelnen Lagen der mehrlagigen Funktionsschicht erzielt, welcher beispielsweise frei von Lufteinschlüssen ist und nicht ohne Zerstörung der Funktionsschicht delaminiert werden kann.

Im Rahmen der vorliegenden Erfindung ist es üblicherweise vorgesehen, dass die mehrlagige Funktionsschicht auf mindestens einer Fläche des Trägermaterials bzw. der Trägerschicht angeordnet ist.

Nachfolgend werden die Bezeichnungen mehrlagige Folie synonym zu mehrlagige Funktionsschicht und Trägerschicht synonym zu Trägermaterial verwendet.

Im Rahmen der vorliegenden Erfindung ist es üblicherweise vorgesehen, dass die Verbundfolie wasserdicht und/oder wasserdampfdurchlässig ist, wobei es besonders bevorzugt ist, wenn die Verbundfolie wasserdicht und wasserdampfdurchlässig ist.

Im Rahmen der vorliegenden Erfindung ist die Verbundfolie insbesondere somit sowohl in hohem Maße wasserdicht als auch durchlässig gegenüber Wasserdampf, so dass einerseits flüssiges Wasser, insbesondere Regen oder schmelzender Schnee, von einem Eindringen in eine Gebäudekonstruktion abgehalten werden, andererseits jedoch Feuchtigkeit aus dem Innern durch die Verbundfolie diffundieren und an die Umgebung abgegeben werden kann.

Gemäß einer bevorzugten Ausführungsform der vorliegenden Erfindung ist die Verbundfolie luftdicht. Im Rahmen der vorliegenden Erfindung wird es bevorzugt vorgesehen, wenn die Verbundfolie zur Erzeugung einer Luftdichtschicht in Gebäuden, insbesondere beispielsweise bei der Herstellung oder Sanierung von Dächern, verwendet werden.

In diesem Zusammenhang werden besonders gute Ergebnisse erhalten, wenn die mehrlagige Folie eine Luftdurchlässigkeit gemäß DIN EN 12114 bei 50 Pa Druckdifferenz von weniger als 0,1 m³/(m²h), insbesondere 0,01 m³/(m²h), bevorzugt 0,005 m³/(m²h), vorzugsweise 0,001 m³/(m²h), aufweist. Folien mit der zuvor genannten Luftdurchlässigkeit können zur Herstellung von Luftdichtschichten in Gebäuden, insbesondere in Dachkonstruktionen, verwendet werden.

Im Rahmen der vorliegenden Erfindung wird es darüber hinaus bevorzugt, wenn die Verbundfolie hydrolysestabil ist. Unter dem Begriff "hydrolysestabil" im Hinblick auf eine Folie ist im Rahmen der vorliegenden Erfindung zu verstehen, dass die Reißdehnung der Folie nach Lagerung über 12 Wochen bei 70 °C und 90 % Luftfeuchtigkeit mindestens 80 % des Ausgangswertes beträgt.

Besonders gute Ergebnisse werden in diesem Zusammenhang erhalten, wenn die mehrlagige Folie eine Wasserdichtheit gemäß DIN EN 20811:1992 von mehr als 2.000 mm, insbesondere mehr als 10.000 mm, vorzugsweise mehr als 25.000 mm aufweist. Gleichermaßen wird es im Rahmen der vorliegenden Erfindung bevorzugt, wenn die mehrlagige Folie eine Wasserdichtheit gemäß DIN EN 20811:1992 von 2.000 bis 25.000 mm, insbesondere 5.000 bis 20.000 mm, vorzugsweise 10.000 bis 15.000 mm, aufweist. Die im Rahmen der vorliegenden Erfindung eingesetzte mehrlagige Folie weist somit eine hohe Wasserdichtheit auf.

Darüber hinaus kann es im Rahmen der vorliegenden Erfindung vorgesehen sein, dass die mehrlagige Folie einen Sd-Wert gemäß DIN EN ISO 12572 von weniger als 0,15 m, insbesondere weniger als 0,1 m, vorzugsweise von kleiner oder gleich 0,09 m, aufweist. Im Rahmen der vorliegenden Erfindung weist die mehrlagige Folie vorzugsweise eine hohe Wasserdampfdurchlässigkeit auf.

Üblicherweise ist es im Rahmen der vorliegenden Erfindung vorgesehen, dass zumindest eine Lage der mehrlagigen Folie als monolithische Schicht ausgebildet ist. Es wird jedoch bevorzugt, wenn sowohl die erste als auch die zweite Schicht der mehrlagigen Folie, insbesondere alle Schichten, welche ein thermoplastisches Polyurethan enthalten oder aus diesem bestehen, als monolithische Schicht ausgebildet sind.

Durch die Verwendung monolithischer Lagen in der mehrlagigen Folie lässt sich eine mehrlagige Folie in Form einer monolithischen Membran erhalten, welche eine hohe Wasser- und Luftdichtheit aufweist, jedoch andererseits durchlässig für Wasserdampf ist. Insbesondere zumindest die Lage der mehrlagigen Folie, welche der Bewitterung ausgesetzt ist, sollte somit als monolithische Membran ausgebildet sein. Vorzugsweise wird jedoch die gesamte mehrlagige Folie, d. h. sämtliche Lagen, als monolithische Membran ausgebildet, da auf diese Weise ein verbesserter Wassertransport durch die Membran erreicht wird.

Was nun das Gewicht der mehrlagigen Folie anbelangt, so hat es sich bewährt, wenn die mehrlagige Folie ein Flächengewicht von 10 bis 150 g/m², insbesondere 20 bis 100 g/m², vorzugsweise 30 bis 80 g/m², aufweist.

Im Rahmen der vorliegenden Erfindung werden darüber hinaus besonders gute Ergebnisse erhalten, wenn sich erste Lage und die zweite Lage der mehrlagigen Folie in ihren chemischen und physikalischen Eigenschaften unterscheiden. Auf diese Weise ist es möglich, insbesondere einen Konzentrationsgradienten für Wasser innerhalb der mehrlagigen Folie einzustellen, wodurch der Wassertransport von der im Anwendungszustand vorgesehenen Innenseite der mehrlagigen Folie auf die Außenseite gefordert und somit ein schnellerer Wasserdampftransport aus einer Gebäudekonstruktion in die Umgebung ermöglicht wird und andererseits eine Diffusion von Wasser in das Gebäude erschwert wird.

Im Rahmen der vorliegenden Erfindung kann es darüber hinaus vorgesehen sein, dass zumindest eine Lage, insbesondere die näher an dem Trägermaterial angeordnete Lage der mehrlagigen Folie eine Härte von kleiner 90 Shore A, insbesondere kleiner 85 Shore A, bevorzugt kleiner 80 Shore A, aufweist. Die Lage, welche vorzugsweise näher an dem Trägermaterial angeordnet ist, ist insbesondere die zuvor beschriebene erste Lage oder Lage A der mehrlagigen Folie. Diese weiche Lage der mehrlagigen Folie besteht gemäß einer besonderen Ausführungsform der vorliegenden Erfindung vorzugsweise aus einem aromatischen thermoplastischen Polyurethan vom Ether-Typ, insbesondere um ein aromatisches C4-Ether-TPU, oder einem aromatischen thermoplastischen Polyurethan vom Ester-Typ und/oder Ether-Ester-Typ. Durch die Verwendung relativ weicher Polyurethane als Schicht, welche direkt mit dem Trägermaterial verbunden ist, wird erreicht, dass ein besonders inniger Verbund zwischen Trägermaterial und der Lage, insbesondere erster Lage, vorzugsweise Lage A, der mehrlagigen Folie erreicht wird, da beispielsweise Fasern oder Filamente des Trägermaterials besonders gut von dieser weichen Schicht der mehrlagigen Folie benetzt und umschlossen werden.

Im Rahmen der vorliegenden Erfindung kann es gleichfalls vorgesehen sein, dass zumindest eine Lage, insbesondere die weiter von dem Trägermaterial entfernt angeordnete Lage der mehrlagigen Folie eine Härte größer 80 Shore A, insbesondere größer 85 Shore A, bevorzugt größer 90 Shore A, aufweist. Bei dieser Lage handelt es sich vorzugsweise um die zweite Lage, insbesondere die Lage B, der mehrlagigen Folie, welche entweder der Bewitterung direkt ausgesetzt ist oder beispielsweise eine weitere Schicht, insbesondere eine Mittelschicht bei Schichtaufbauten vom Typ ABC oder ABA, der mehrlagigen Folie bildet. Die Schicht mit einer relativ hohen Härte schützt die mehrlagige Folie vor Beschädigung und verhindert darüber hinaus, dass beispielsweise Fasern oder Filamente des Trägermaterials die mehrlagige Folie durchdringen und somit die Struktur der Folie insgesamt schwächen oder zerstören.

Bei dem Material für die härtere Lage der mehrlagigen Folie handelt es sich vorzugsweise gemäß einer besonderen Ausführungsform der vorliegenden Erfindung um ein aromatisches Polyurethan vom Carbonat-Typ.

Gemäß einer bevorzugten Ausführungsform der vorliegenden Erfindung ist es vorgesehen, dass die näher an dem Trägermaterial angeordnete Lage, vorzugsweise die direkt auf das Trägermaterial aufgebrachte Lage, der mehrlagigen Folie eine geringere Shore-A-Härte als die weiter von dem Trägermaterial entfernt angeordnete Lage der mehrlagigen Folie aufweist. Auf diese Weise kann verhindert werden, dass bei Aufbringung der mehrlagigen Folie auf das Trägermaterial, insbesondere durch Coextrusion, das Trägermaterial die mehrlagige Folie durchstößt.

Im Rahmen der vorliegenden Erfindung ist es üblicherweise vorgesehen, dass die erste und die zweite Lage der mehrlagigen Folie direkt aufeinander angeordnet sind. Insbesondere werden die erste und die zweite Lage der mehrlagigen Folie vorzugsweise durch Coextrusion aus der Schmelze hergestellt und bilden ein Kompositmaterial.

Im Rahmen der vorliegenden Erfindung kann es weiterhin vorgesehen sein, dass das thermoplastische Polyurethan mindestens ein Additiv, insbesondere mindestens einen Stabilisator, aufweist. Falls das thermoplastische Polyurethan ein Additiv, insbesondere einen Stabilisator, aufweist, so weist das thermoplastische Polyurethan das Additiv, insbesondere den Stabilisator, in Mengen von 0,05 bis 10 Gew.-%, vorzugsweise 0,5 bis 8 Gew.-%, insbesondere 1 bis 6 Gew.-%, bezogen auf das thermoplastische Polyurethan, auf.

Besonders gute Ergebnisse werden in diesem Zusammenhang erhalten, wenn das Additiv, insbesondere der Stabilisator, ausgewählt ist aus UV-Absorbern, UV-Quenchern, Radikalfängern und Hydroperoxidzersetzern. Mit den vorgenannten Additiven bzw. Stabilisatoren wird die Widerstandsfähigkeit des thermoplastischen Polyurethans, insbesondere des thermoplastischen Polyurethans, welches der Bewitterung verstärkt ausgesetzt ist, gegenüber UV-Strahlung erhöht.

Gemäß einer bevorzugten Ausführungsform der vorliegenden Erfindung ist es vorgesehen, dass die im Anwendungsfall als äußere Lage vorgesehene Lage der mehrlagigen Folie einen höheren Anteil an Additiven, insbesondere an Stabilisatoren, aufweist als die weiteren Lagen der mehrlagigen Folie. Im Rahmen der vorliegenden Erfindung ist es somit absolut ausreichend, wenn die als äußere Lage vorgesehene Lage der mehrlagigen Folie einen höheren Anteil an Additiven, insbesondere Stabilisatoren, aufweist, da insbesondere die als äußere Lage vorgesehene Lage der mehrlagigen Folie der Bewitterung und UV-Strahlung ausgesetzt ist und somit den gesamten Verbund gegenüber Bewitterung schützt.

In diesem Zusammenhang kann es vorgesehen sein, dass das thermoplastische Polyurethan der im Anwendungsfall als äußere Lage vorgesehenen Lage der mehrlagigen Folie das Additiv, insbesondere den Stabilisator, in Mengen von 0,5 bis 10 Gew.-%, vorzugsweise 1 bis 8 Gew.-%, insbesondere 2 bis 6 Gew.-%, bezogen auf das thermoplastische Polyurethan, aufweist.

Gleichermaßen kann es vorgesehen sein, dass das thermoplastische Polyurethan einer im Anwendungsfall nicht als äußere Lage vorgesehene Lage der mehrlagigen Folie das Additiv, insbesondere den Stabilisator, in Mengen von 0,05 bis 5 Gew.-%, vorzugsweise 0,5 bis 4 Gew.-%, insbesondere 1 bis 3 Gew.-%, bezogen auf das thermoplastische Polyurethan, aufweist.

Was nun das Trägermaterial der ersten Schicht anbelangt, so hat es sich bewährt, wenn die Schicht des Trägermaterials aus einem Vlies, einem Gewebe, einem Gestricke oder einem Gewirke, insbesondere einem Vlies, gebildet wird.

Besonders gute Ergebnisse werden in diesem Zusammenhang erhalten, wenn ein Vlies eingesetzt wird und das Vlies ein nadel- oder nassstrahlverfestigtes Vlies, ein polyolefinisches Vlies, insbesondere ein Polyethylen-Vlies oder ein Polypropylenvlies, ein Polyester-Vlies, insbesondere ein Polyethylenterephthalat-Vlies, ein Naturfaservlies, ein Polyamid-Vlies, ein Bikomponenten-Vlies oder ein PLA-Vlies, vorzugsweise ein Polyamid-Vlies, ist. Unter einem PLA-Vlies ist im Rahmen der vorliegenden Erfindung ein Vlies auf Basis von Polylactid zu verstehen.

Die Trägerschicht kann insbesondere als innere Schutzschicht und/oder die weitere Trägerschicht als äußere Schutzschicht ausgebildet sein oder vice versa.

Bei einer weiteren bevorzugten Ausführungsform ist vorgesehen, dass wenigstens zwei erste Schichten in Form eines Trägermaterials vorgesehen sind. Die zwei weiteren ersten Schichten können als äußere Schutzschicht und als innere Schutzschicht ausgebildet sein.

Vorzugsweise sind die äußere Schutzschicht und die innere Schutzschicht in einer ersten Ausführungsform als eine Polyolefin aufweisende Vliesschicht ausgebildet. Insbesondere ist vorgesehen, dass die äußere Schutzschicht und/oder die innere Schutzschicht wenigstens eine Bikomponentenfaser mit einer ersten Komponente und einer zweiten Komponente aufweist, wobei die erste Komponente ein erstes Polymer und die zweite Komponente ein zweites Polymer als Bestandteil aufweist.

Bei einer zweiten bevorzugten Ausführungsform ist vorgesehen, dass die äußere Schutzschicht und die innere Schutzschicht als eine Polyethylenterephthalat (PET) aufweisende Vliesschicht ausgebildet sind. Insbesondere ist es vorgesehen, dass die äußere Schutzschicht und/oder die innere Schutzschicht wenigstens eine Bikomponentenfaser mit einer ersten Komponente und einer zweiten Komponente aufweist, wobei die erste Komponente ein erstes Polymer und die zweite Komponente ein zweites Polymer als Bestandteil aufweist.

Des Weiteren ist bei einer dritten weiteren bevorzugten Ausführungsform vorgesehen, dass die äußere Schutzschicht als eine Polyolefin aufweisende Vliesschicht und die innere Schutzschicht als eine Polyester aufweisende Vliesschicht ausgebildet ist.

Bei einer weiteren ganz besonders bevorzugten Ausführungsform der vorgenannten dritten Ausführungsform ist vorgesehen, dass die äußere Schutzschicht und/oder die innere Schutzschicht wenigstens eine Bikomponentenfaser mit einer ersten Komponente und einer zweiten Komponente aufweist, wobei die erste Komponente ein erstes Polymer und die zweite Komponente ein zweites Polymer als Bestandteil aufweist.

Unter der äußeren Schutzschicht kann diejenige Schutzschicht verstanden werden, die der Witterungsseite zugewandt ist - sofern die Verbundfolie zum Schutz vor der Witterung eingesetzt wird. Grundsätzlich ist es auch denkbar, dass die Verbundfolie nicht zum Witterungsschutz eingesetzt wird. In diesem Fall wäre die Anordnung der äußeren Schutzschicht und der inneren Schutzschicht vertauschbar. Insbesondere ist die innere Schutzschicht aber dem zu schützenden Gut, beispielsweise dem Gebäudeinneren, dem Baumaterial oder dergleichen, zugewandt.

Durch die Verwendung der Bikomponentenfaser in wenigstens einer Schutzschicht kann die gesamte Festigkeit der Verbundfolie deutlich erhöht werden, bevorzugt um wenigstens 10 %, weiter bevorzugt zwischen 20 % bis 70 %.

Die die Bikomponentenfaser aufweisende Schutzschicht ist gegenüber aus dem Stand der Technik bekannten Vliesschichten, insbesondere Polypropylen- oder Polyethylen-Vliesschichten, dahingehend vorteilhaft, dass sie eine erhöhte mechanische Festigkeit gewährleistet. Darüber hinaus kann die die Bikomponentenfaser aufweisende Schutzschicht hydrophob (wasserabweisend) ausgebildet sein. Eine verbesserte Festigkeit zeigt sich gerade bei einer längerfristigen und/oder erhöhten mechanischen Beanspruchung der Verbundfolie als vorteilhaft. Wird beispielsweise die Verbundfolie als Dachbahn, insbesondere Unterspannbahn und/oder Unterdeckbahn, eingesetzt, so ist sie mechanischen Beanspruchungen nicht nur bei der Verlegung, sondern auch bei der Begehung des Dachs, beispielsweise durch Dachdecker, ausgesetzt.

Vorzugsweise kann durch die Verwendung der Polyethylenterephthalat-Vliesschichten die Verbundhaftung zu der zweiten Schicht verbessert werden, insbesondere um bis zu 15 % im Vergleich zu aus dem Stand der Technik bekannten Vliesschichten.

Insbesondere können die äußere Schutzschicht und/oder die innere Schutzschicht als eine, vorzugsweise thermoverfestigte oder nadel- oder nassstrahlverfestigte, Vliesschicht ausgebildet sein.

Als Vliesschicht kann ein polyolefinisches Vlies vorgesehen sein, insbesondere ist eine Polypropylen aufweisende und/oder daraus bestehende Vliesschicht vorgesehen. Ganz besonders bevorzugt ist die Ausbildung der äußeren Schutzschicht und/oder der inneren Schutzschicht als Polypropylen-Nadelvliesschicht. Die Vliesschicht stellt insbesondere die mechanischen Eigenschaften der Verbundfolie sicher und gewährleistet darüber hinaus einen Schutz der zwischen den Schutzschichten eingefassten Funktionsschicht.

Besonders bevorzugt ist die äußere Schutzschicht und/oder die innere Schutzschicht als Spinnvliesschicht ausgebildet. Ein Spinnvliesstoff bzw. eine Spinnvliesschicht weist einen Vliesstoff aus Fasern mit zumindest im Wesentlichen unbegrenzter Länge - das heißt mit Langfasern - auf.

Vorzugsweise sind die in der äußeren und/oder inneren Schutzschicht vorgesehenen Fasern der Spinnvliesschicht als Bikomponentenfasern ausgebildet. So kann die aus Endlosfasern hergestellte Spinnvliesschicht aus Bikomponentenendlosfasern hergestellt sein.

Zudem kann bei einer weiteren bevorzugten Ausführungsform des Erfindungsgedankens das Flächengewicht bzw. die Grammatur der äußeren Schutzschicht und/oder der inneren Schutzschicht kleiner oder gleich 250 g/m² sein. Bevorzugt liegt das vorgenannte Flächengewicht zwischen 1 g/m² bis 250 g/m², weiter bevorzugt zwischen 10 g/m² und 150 g/m², vorzugsweise zwischen 20 g/m² bis 120 g/m² und insbesondere zwischen 30 g/m² und 100 g/m². Die Grammatur der Schutzschichten ist dabei derart gewählt, dass bei einem möglichst geringen Gesamtflächengewicht der Verbundfolie weiterhin die benötigten Eigenschaften der Verbundfolie, insbesondere die Elastizität, Stabilität, Reißfestigkeit und/oder Weiterreißfestigkeit, hinreichend gewährleistet werden können, wobei die Verbundfolie aufgrund der außenseitigen Schutzschichten, die gleichfalls auch als Trägerschichten bezeichnet werden können, einen mechanischen Schutz der Funktionsschicht ermöglicht.

Die innere und die äußere Schutzschicht können eine unterschiedliche Grammatur und/oder ein unterschiedliches Flächengewicht, Materialzusammensetzung und/oder sich voneinander unterscheidende Bikomponentenfasern aufweisen. Alternativ oder zusätzlich kann vorgesehen sein, dass die innere und die äußere Schutzschicht zumindest im Wesentlichen gleich und/oder identisch ausgebildet sind.

Eine identische Ausbildung der Schutzschichten ist insbesondere derart zu verstehen, dass die Schutzschichten die gleichen Oberflächeneigenschaften, das gleiche Material und/oder Materialzusammensetzung und/oder die gleiche Grammatur aufweisen. Insbesondere können die äußere und die innere Schutzschicht funktionsgleich ausgebildet sein, insbesondere wobei das Flächengewicht der identischen Schutzschichten um weniger als 5 g/m² voneinander abweicht.

Vorzugsweise ist ein symmetrischer Aufbau der Lagen der Verbundfolie vorgesehen.

Des Weiteren kann die äußere Schutzschicht und/oder die innere Schutzschicht als mechanisch, chemisch und/oder thermisch, vorzugsweise thermisch, verfestigte Vliesschicht ausgebildet sein. Eine Vliesschicht zeichnet sich insbesondere aufgrund der geringen Herstellungskosten bei einer hohen mechanischen Widerstandfähigkeit gegenüber äußeren Einflüssen aus.

Erfindungsgemäß ist vorgesehen, dass die innere Schutzschicht und/oder die äußere Schutzschicht wenigstens eine Bikomponentenfaser aufweist bzw. einen Bikomponentenfaser-Aufbau hat. Insbesondere ist die als Vliesschicht ausgebildete innere und/oder äußere Schutzschicht als Vliesschicht aus Bikomponentenfasern ausgebildet. Insbesondere ist eine Bikomponentenfaser-Spinnvliesschicht vorgesehen.

Bikomponentenfasern der in Rede stehenden Art weisen üblicherweise eine erste Komponente aus einem ersten Polymer und eine zweite Komponente aus einem zweiten Polymer auf. Dabei kann zwischen unterschiedlichen Typen von Bikomponentenfasern unterschieden werden, die jeweils unterschiedliche charakteristische Verteilungen der Komponenten im Faserquerschnitt aufweisen. Bikomponentenfasern, bei denen die erste Komponente die zweite Komponente im Querschnitt der Faser umgibt und somit einschließt, werden als Kern-Mantel-Fasern bezeichnet. Bikomponentenfasern, bei denen sowohl die erste Komponente als auch die zweite Komponente einen Teil der Faseroberfläche im Querschnitt der Faser bildet, werden als Side-by-Side-Fasern bezeichnet. Fasern mit Strukturen, bei denen mehrere Stränge einer Komponente in einen Strang der anderen Komponente eingebettet sind, so dass sich im Querschnitt ein Bild ergibt, das an eine Mehrzahl aus einer Komponente gebildete Inseln erinnert, werden als Island-in-the-Sea-Fasern bezeichnet. Bikomponentenfasern, bei denen im Querschnitt jeweils eine Mehrzahl an Bereichen der jeweiligen Komponente vorhanden ist und die äußere Faseroberfläche bildet, werden als Segmented-Pie-Fasern bezeichnet, da die Bereiche der einzelnen Komponenten im Querschnitt regelmäßig eine tortenstückartige Aufteilung aufweisen. Als Bikomponentenfasern im Sinne der vorliegenden Anmeldung sind dabei auch ausdrücklich solche Fasern zu verstehen, die mehr als zwei Komponenten aufweisen.

Zweck der Bikomponentenfasern ist es, die Eigenschaften der Fasern oder die Eigenschaften der aus den Fasern hergestellten Spinnvliese zu verbessern. Die Eigenschaften eines Spinnvlieses hängen dabei von einer Vielzahl von Einflussfaktoren ab. Einige dieser Einflussfaktoren auf die Eigenschaften eines Spinnvlieses sind dabei Eigenschaften der jeweils verwendeten Fasern, wie z.B. deren Festigkeit. Eine weit verbreitete und zumindest in ihrem Grundgedanken anerkannte Theorie ist die, dass die Eigenschaften der resultierenden Bikomponentenfaser dann eine Kombination der Eigenschaften der einzelnen Komponenten der Bikomponentenfaser darstellen, bei der sich die Eigenschaften der einzelnen Komponenten möglichst dahingehend ergänzen, dass die Vorteile der Eigenschaften beider Komponenten in der Bikomponentenfaser vereint werden. Wird beispielsweise eine Faser gewünscht, die sowohl eine hohe Festigkeit aufweist als auch ein vorteilhaftes Verhalten beim Verbinden der Fasern untereinander bei der Vliesherstellung zeigt, so bietet es sich an, eine erste Komponente mit einer hohen Festigkeit mit einer zweiten Komponente, die eine gute Verbindbarkeit aufweist, zu kombinieren.

Zur Verbesserung der Eigenschaften der Bikomponentenfasern werden den Polymeren häufig Additive zugesetzt. Bei den Additiven kann es sich um die verschiedensten Stoffe handeln. Diese können beispielsweise zur Färbung, zur Thermostabilisation, zur Flammhemmung, zur Hydrophilierung oder zur Hydrophobierung oder zur UV-Stabilisation dienen. Dabei sind die Additive regelmäßig gleichmäßig in der Phase verteilt.

Das erste Polymer und das zweite Polymer können zumindest im Wesentlichen identisch ausgebildet sein, insbesondere wobei die erste Komponente und die zweite Komponente sich voneinander unterscheidende Additive und/oder Additivzusammensetzungen und/oder Additivmengen aufweisen.

Vorzugsweise weist die erste Komponente ein Additiv auf, wobei der Massenanteil des Additivs in der zweiten Komponente kleiner ist als in der ersten Komponente. Erfindungsgemäß kann die erste Komponente somit ein Additiv zur Eigenschaftsbeeinflussung bzw. -verbesserung aufweisen.

Dabei beträgt vorzugsweise der Massenanteil des Additivs der ersten Komponente in der zweiten Komponente höchstens 66,6%, weiter vorzugsweise höchstens 50% und insbesondere höchstens 33,3%. Ganz besonders bevorzugt ist das Additiv in der zweiten Komponente nicht vorhanden.

Vorzugsweise ist dabei der Massenanteil der ersten Komponente an der Bikomponentenfaser höchstens 50%, bevorzugt 25%, besonders bevorzugt 10%, ganz besonders bevorzugt 5%. Dabei ist die Bikomponentenfaser besonders bevorzugt eine Kern-Mantel-Faser, wobei die erste Komponente den Mantel bildet.

Der Vorteil der Aufkonzentrierung der Additive in der ersten, die zweite Komponente umgebenden Komponente liegt darin, dass sich gezeigt hat, dass die Menge des benötigten Additivs in der zweiten Komponente niedriger sein kann als bei der üblichen Gleichverteilung des Additivs in den beiden Komponenten, wenn die gleiche oder eine verbesserte Wirkung des Additivs erzeugt werden soll.

Unter Additiv in diesem Sinne werden Zusatzstoffe verstanden, die dem Polymer in der jeweiligen Komponente zugefügt werden, um die Eigenschaften der resultierenden Faser bzw. des aus der Faser gewonnenen Spinnvlieses zu modifizieren und dadurch zu verbessern.

Beispielsweise lässt sich bei der Durchführung eines Brandtests gemäß EN 13501-1 feststellen, dass bei der erfindungsgemäßen Verteilung des Additivs in den Komponenten eine geringere Menge des Additivs insgesamt, in diesem Beispiel ein Flammhemmer, ausreicht, um zu einem positiven Testergebnis zu führen, als wenn der Flammhemmer gleichmäßig in der Faser verteilt ist. Bei diesem Test wird innerhalb von Sekundenbruchteilen die gesamte Faser von der Flamme erfasst, daher lässt sich der vorteilhafte Effekt nicht ohne Weiteres auf einer Art Abschirmungswirkung des Mantelbereichs der Faser zurückführen.

Die Additive, die in geringen Konzentrationen den Polymeren zugesetzt werden, stellen im Hinblick auf die Faserherstellung grundsätzlich eine Verunreinigung des Polymers dar. Bei Verunreinigungen besteht grundsätzlich immer das Risiko, dass sich aufgrund dieser Verunreinigungen das Verhalten der Komponenten bei der Herstellung der Faser ändert. Daher birgt eine Ungleichverteilung der Additive in den Komponenten der Bikomponentenfaser aus der Sicht des Fachmannes zunächst das Risiko, dass sich die Qualität der Bikomponentenfaser oder die Stabilität des Herstellungsprozesses verschlechtert. Zudem kommt es aus der Sicht des Fachmannes regelmäßig nicht darauf an, dass ein Additiv in einer bestimmten Zone der Faser aufkonzentriert wird. Dies liegt an der geringen Dicke der in Rede stehenden Fasern. Ähnlich wie es bei Farbstoffen oder Pigmenten der Fall ist, macht es auch bei Additiven aus der Sicht des Fachmannes ebenfalls keinen offensichtlichen Sinn, diese in einer bestimmten Zone der Faser anzureichern. So wird beispielsweise bei einem Flammenhemmer ohnehin die gesamte Faser von den Verbrennungsvorgängen betroffen sein. Auch wird UV-Strahlung in die gesamte Faser eindringen. Dennoch hat sich überraschenderweise gezeigt, dass in einigen Fällen sogar besonders vorteilhafte Ergebnisse erzielt werden können, wenn das Additiv in der einen Komponente nicht nur verringert, sondern gänzlich weggelassen wird. Ein Vorteil der Aufkonzentrierung der Additive in der ersten Komponente ist jedenfalls die Kostenersparnis durch die niedrigere benötigte Additivmenge.

Vorteilhafterweise handelt es sich bei dem Additiv um ein primäres oder sekundäres Antioxidanz, einen UV-Absorber, einen UV-Stabilisator, einen Flammhemmer, ein Antistatikum, ein Gleitmittel, einen Metalldesaktivator, ein Hydrophilierungsmittel, ein Hydrophobierungsmittel, ein Antifogging-Additiv und/oder ein Biozid. Besonders bevorzugt sind dabei folgende Stoffklassen und Mischungen daraus:
- Sterisch gehinderte Phenole, aromatische sekundäre oder tertiäre Amine, Aminophenole, aromatische Nitro- oder Nitrosoverbindungen als primäre Antioxidantien.
- Organische Phosphite oder Phosphonate, Thioether, Thioalkohole, Thioester, Sulfide und schwefelhaltige organische Säuren, Dithiocarbamate, Thiodipropionate, Aminopyrazole, metallhaltige Chelate, Mercaptobenzimidazole als sekundäre Antioxidantien.
- Hydroxybenzophenone, Cinnamate, Oxalanilide, Salicylate, 1,3 Benzoldiol-Monobenzoate, Benzotriazole, Triazine, Benzophenone sowie UVabsorbierende Pigmente wie Titandioxid oder Ruß als UV-Absorber.
- Metallhaltige Komplexe organischer Schwefel- oder Phosphorverbindungen, sterisch gehinderte Amine (HALS) als UV-Stabilisatoren.
- Metallhydroxide, Borate, organische brom- oder chlorhaltige Verbindungen, organische Phosphorverbindungen, Antimontrixoxid, Melamin, Melamincyanurat, Blähgraphit oder andere Intumeszenz-Systeme als Flammhemmer.
- Quartäre Ammoniumsalze, Alkylsulfonate, Alkylsufate, Alkylphosphate, Dithiocarbamate, (Erd-)Alkalimetallcarboxylate, Polyethylenglykole sowie deren Ester und Ether, Fettsäureester, Ethoxylate, Mono- und Diglyceride, Ethanolamine als Antistatika.
- Fettalkohole, Ester von Fettalkoholen, Fettsäuren, Fettsäureester, Dicarbonsäureester, Fettsäureamide, Metallsalze von Fettsäuren, Polyolefinwachse, natürliche oder künstliche Paraffine und deren Derivate, Fluorpolymere und Fluoroligomere, Antiblockmittel wie Kieselsäuren, Silikone, Silikate, Calciumcarbonat etc. als Gleitmittel.
- Amide von Mono- und Dicarbonsäuren und deren Derivate, zyklische Amide, Hydrazone und Bishydrazone, Hydrazide, Hydrazine, Melamin und dessen Derivate, Benzotriazole, Aminotriazole, sterisch gehinderte Phenole in Verbindung mit komplexierenden Metallverbindungen, Benzylphosphonate, Pyridithiole, Thiobisphenolester als Metalldesaktivatoren.
- Polyglycole, Ethoxylate, Fluorpolymere und Fluoroligomere, Montanwachse, insbesondere Stearate, als Hydrophilierungs-, Hydrophobierungs- oder AntiFogging-mittel.
- 10,10'-Oxybisphenoxarsin (OBPA), N-(Trihalogen-methylthiol)phthalimid, Tributylzinnoxid, Zinkdimethyldithiocarbamat, Diphenylantimon-2-ethylhexanoat, Kupfer-8-hydroxychinolin, Isothiazolone, Silber und Silbersalze als Biozide.

Vorteilhafterweise ist die Differenz der Schmelzpunkte der ersten Komponente und der zweiten Komponente kleiner oder gleich 8 °C. Hinzuweisen ist darauf, dass in den angegebenen Intervallen jedwede Einzelintervalle oder Einzelwerte enthalten und als erfindungswesentlich offenbart anzusehen sind, auch wenn sie im Einzelnen nicht genannt sind.

Im Zusammenhang mit der vorteilhaften Wahl der Schmelzpunkte hat sich überraschenderweise gezeigt, dass bei Bikomponentenfasern, bei denen die beiden Komponenten ähnliche Schmelzpunkte aufweisen, eine Verbesserung der Synergieeffekte zwischen den Eigenschaften der beiden Komponenten erzielt werden kann. Dies betrifft insbesondere mechanische Eigenschaften. Beispielsweise ist es möglich, im Falle eines aus erfindungsgemäßen Bikomponentenfasern hergestellten Spinnvlieses sowohl die spezifische Reißkraft als auch die spezifische Nagelausreißkraft zu steigern. Bei konventionellen Fasern nach dem Stand der Technik gingen Maßnahmen bei der Herstellung von Spinnvliesen aus diesen Fasern, die der Steigerung der spezifischen Reißkräfte dienten, regelmäßig mit einer Senkung der spezifischen Nagelausreißkräfte einher. Im umgekehrten Fall führten Maßnahmen zur Steigerung der spezifischen Nagelausreißkräfte regelmäßig zum Sinken der spezifischen Reißkräfte. Diese nachteiligen Effekte können mit den vorteilhaften Bikomponentenfasern vermieden oder zumindest abgeschwächt werden.

Zu den positiven Effekten der vorliegenden Erfindung gehört auch, dass sich der Anteil rezyklierten Materials, der einer der Komponenten bei der Herstellung der Bikomponentenfaser zugesetzt werden kann, gegenüber herkömmlichen Fasern steigert. Es hat sich gezeigt, dass bei der Verwendung von Komponenten mit erfindungsgemäß kombinierten Schmelzpunkten die Änderung der Eigenschaften einer Komponente, die durch die Zugabe von rezykliertem Material verursacht wird, weitaus geringer ausfällt als bei herkömmlichen Fasern.

Dabei bildet vorzugsweise die Komponente mit dem niedrigeren Schmelzpunkt im Querschnitt der Faser die äußere Oberfläche der Faser. Vorzugsweise umgibt die Komponente mit dem niedrigeren Schmelzpunkt die Komponente mit dem höheren Schmelzpunkt. Diese vorteilhafte Ausgestaltung führt dazu, dass die niedrigschmelzende Komponente im Mantelbereich der Faser für eine bessere Verfestigbarkeit des Materials sorgt, zudem verbessert sich die Spinnstabilität sowie die Dehnbarkeit der Fasern. Dies führt zu einer Verbesserung der Weichheit und/oder Haptik des Spinnvlieses, des weiteren wird die Drapierbarkeit der Fasern bzw. eines aus den Fasern gewonnenen Spinnvlieses verbessert.

Im Zusammenhang mit der Erfindung ist es vorteilhaft, wenn die Differenz der Schmelzpunkte der ersten Komponente und der zweiten Komponente höchstens 6 °C oder zwischen 1 °C bis 8 °C, bevorzugt zwischen 1 °C bis 6 °C, ist. In diesen vorteilhaften Parameterbereichen treten die positiven Effekte der vorliegenden Erfindung signifikant stärker auf.

Vorzugsweise ist der Massenanteil der Komponente mit dem niedrigeren Schmelzpunkt an der Bikomponentenfaser höchstens 50 %, weiter vorzugsweise höchstens 25 %, bevorzugt höchstens 10 %, insbesondere höchstens 5 %. Dabei ist die Bikomponentenfaser besonders bevorzugt eine Kern-Mantel-Faser, wobei die Komponente mit dem niedrigeren Schmelzpunkt den Mantel bildet.

Vorteilhafterweise ist die Differenz der Melt-Flow-Indices der ersten Komponente und der zweiten Komponente kleiner oder gleich 25 g/10 min, wobei die Melt-Flow-Indices (im Folgenden MFI) der ersten Komponente und der zweiten Komponente jeweils kleiner oder gleich 50 g/10 min sind. Bevorzugt ist die Differenz der Melt-Flow-Indices der ersten Komponente und der zweiten Komponente kleiner oder gleich 20 g/10 min, besonders bevorzugt 15 g/10 min und/oder die MFIs der ersten Komponente und der zweiten Komponente sind jeweils kleiner oder gleich 40 g/10 min. Eine derartige vorteilhafte Auswahl der Komponenten nach dem Kriterium ihrer MFIs wirkt sich überraschenderweise auf ähnliche Art positiv aus wie die erfindungsgemäße Auswahl der Komponenten anhand ihrer Schmelzpunkte.

Dabei wird der MFI gemessen nach ISO 1133 mit einer Prüflast von 2,16 kg und einer Prüftemperatur von 230 °C. Der MFI wird dabei auch als Schmelzflussindex oder auch als Schmelzemasse-Fließrate (MFR) bezeichnet. Die Ermittlung erfolgt nach ISO 1133, indem das Material in einem beheizbaren Zylinder aufgeschmolzen und mittels der Prüflast durch eine definierte Düse gedrückt wird. Der MFI ist ein Maß für die Viskosität der Schmelze der jeweiligen polymerhaltigen Komponente. Die Viskosität wiederum hängt zusammen mit dem Polymerisationsgrad, welcher der mittleren Anzahl von Monomereinheiten in jedem Molekül eines Polymers entspricht.

Der positive Einfluss der vorteilhaften Differenzen der MFIs betrifft im Wesentlichen die spezifische Reißkraft und die spezifische Nagelausreißkraft. Diese beiden Kennwerte eines aus den Fasern hergestellten Spinnvlieses lassen sich durch die vorteilhaft gewählten MFIs verbessern. Dabei ist sogar eine gleichzeitige Steigerung beider Kennwerte möglich, jedenfalls aber lässt sich einer der beiden Kennwerte verbessern, ohne dass der andere Kennwert sich verschlechtert. Dies macht sich auch positiv in den haptischen Eigenschaften bemerkbar. So lässt sich die spezifische Reißkraft steigern, ohne dass Weichheit und der sogenannte "textile Griff" negativ beeinflusst werden. Unter textilem Griff wird dabei ein als angenehm empfundenes Berührungsgefühl verstanden.

Vorzugsweise ist der Massenanteil der Komponente mit dem höheren MFI an der Bikomponentenfaser höchstens 50 %, weiter vorzugsweise höchstens 25 %, bevorzugt höchstens 10 %, insbesondere höchstens 5 %. Dabei die Bikomponentenfaser besonders bevorzugt eine Kern-Mantel-Faser, wobei die Komponente mit dem höheren MFI den Mantel bildet.

Vorteilhafterweise ist das Polymer einer der beiden Komponenten mit einem Metallocen-Katalysator polymerisiert worden und das Polymer der anderen Komponente ist mit einem Ziegler-Natta-Katalysator polymerisiert und einer anschließenden Visbreaking-Behandlung unterzogen worden. Dabei handelt es sich bei dem Polymer vorzugsweise um ein Polyolefin, insbesondere Polypropylen, Polyethylen oder deren Copolymer oder eine Mischung daraus. Das andere Polymer ist vorzugsweise ebenfalls Polyolefin oder ein Polyolefin-Copolymer. Dabei ist es besonders vorteilhaft, wenn beide Polymere aus dem gleichen Monomer aufgebaut sind oder zumindest überwiegend aus dem gleichen Monomer aufgebaut sind.

Metallocen-Katalysatoren sind strukturell einheitliche Katalysatoren, die von Cyklopentadien-Liganden koordinierte Übergangsmetalle enthalten. Derartige Katalysatoren sind detailliert in der US 5,374,696 und der US 5,064,802 beschrieben. Auf die diesbezügliche Offenbarung wird ausdrücklich Bezug genommen. Der Vorteil dieser Katalysatoren ist es, dass die mit diesen Katalysatoren hergestellten Polymere eine enge Molekulargewichtsverteilung aufweisen. Die enge Molekulargewichtsverteilung führt zu Vliesen mit hoher Reißdehnung. Dabei ist die Reißdehnung die Dehnung der Fasern, die sich am Maximum der Reißkraft ergibt, die beim Zerreißen eines Vliesstreifens aufgewendet wird. Vor allem aber führt eine enge Molekulargewichtsverteilung zu einer Erhöhung der Prozesssicherheit bei der Herstellung der Spinnvliese. Die Häufigkeit von Spinnstörungen, wie beispielsweise Faserbruch, wird reduziert. Weiterhin ist eine höhere Verstreckung der Fasern möglich, es können höhere Spinngeschwindigkeiten erreicht werden und die Titer, die erreicht werden können, sind niedriger. Dabei bedeuten niedrigere Titer eine höhere Feinheit der Fasern und/oder der aus den Fasern gewonnenen Garne.

Ein weiterer Vorteil der Metallocen-Katalysatoren bzw. der mittels Metallocen-Katalysatoren hergestellten Polymere ist, dass der Restgehalt des Katalysators im Polymer sehr gering ist. Der Restgehalt des Katalysators im Polymer stellt eine Verunreinigung des Polymers dar und kann dazu führen, dass die Eigenschaften des Polymers in unerwünschter Weise verändert werden. So kann es beispielsweise zu Verfärbungen bei der Verarbeitung des Polymers kommen.

Ein Nachteil der Metallocen-Katalysatoren ist deren im Vergleich zu den Ziegler-Natta Katalysatoren geringfügig höherer Preis. Weiterhin kann eine thermische Verfestigung der Fasern bei der Vliesherstellung bei dem Einsatz von Metallocen-Katalysatoren erschwert werden. Dies kann dann der Fall sein, wenn die durch den Einsatz von Metallocen-Katalysatoren eröffneten Möglichkeiten, die Kristallinität und Festigkeit der einzelnen Fasern durch deren höhere Verstreckbarkeit zu erhöhen, in hohem Maße ausgenutzt wird.

Ziegler-Natta-Katalysatoren sind heterogene Mischkatalysatoren, die metallorganische Verbindungen von Hauptgruppenelementen und Übergangsmetallverbindungen enthalten. Als Hauptgruppenelemente werden insbesondere Elemente der ersten bis dritten Hauptgruppe verwendet. Die Übergangsmetallverbindungen enthalten insbesondere Metalle der Titangruppe. Es existiert eine Vielzahl von Varianten dieser Katalysatoren. Im Sinn der vorliegenden Erfindung sind die Ziegler-Natta-Katalysatoren im Wesentlichen durch ihre Abgrenzung von den Metallocen-Katalysatoren definiert.

Die Ziegler-Natta-Katalysatoren sind zwar kostengünstiger als die Metallocen-Katalysatoren, die mit den Ziegler-Natta-Katalysatoren erzeugten Poylmere weisen jedoch eine deutlich breitere Molekulargewichtsverteilung auf als mit Metallocen-Katalysatoren hergestellte Polymere. Zur Verbesserung der Verstreckbarkeit der Fasern, was insbesondere der Erhöhung der Prozesssicherheit dient, werden die mit Ziegler-Natta-Katalysatoren hergestellten Polymere daher üblicherweise nachbehandelt. Diese Nachbehandlung wird als "Visbreaking" bezeichnet. Bei der Visbreaking-Behandlung werden Polymerketten gespalten, wodurch sich das Molekulargewicht der einzelnen Moleküle verringert und die Anzahl der Moleküle erhöht. Dabei verringert sich auch die Breite der Molekulargewichtsverteilung. Die Spaltung der Polymerketten wird durch Hitze, Bestrahlung, die Zugabe von Peroxyd oder durch ähnliche Maßnahmen herbeigeführt. Beispiele solcher Visbreaking-Behandlungen sind u. a. in der US 4,282,076 und der US 5,723,217 beschrieben.

Durch eine derartige Visbreaking-Behandlung kann jedoch weder die enge Molekulargewichtsverteilung der mit Metallocen-Katalysatoren erzeugten Polymere, noch die gute Verstreckbarkeit der aus diesen Polymeren gewonnenen Fasern erzielt werden. Auch weisen mit Ziegler-Natta-Katalysatoren erzeugte Polymere einen höheren Gehalt an Verunreinigungen auf als Polymere, die mit Metallocen-Katalysatoren erzeugt worden sind. Dies liegt zum einen daran, dass bei der Herstellung des Polymers mit einem Ziegler-Natta-Katalysator ein vergleichsweise höherer Katalysatorgehalt benötigt wird, der einen vergleichsweise höheren Anteil an Katalysatorrückständen im Polymer bedingt und zum anderen an Hilfsstoffen, die im Rahmen der Visbreaking-Behandlung zugegeben werden, wodurch sie eine zusätzliche Quelle für Verunreinigungen des fertigen Polymers darstellen.

Der Vorteil von Polymeren, die unter Verwendung von Ziegler-Natta-Katalysatoren mit einer anschließenden Visbreaking-Behandlung hergestellt werden, ist vor allem deren günstiger Preis und deren hohe Verfügbarkeit auf dem Markt. Ein weiterer Vorteil ist die gute thermische Verbindbarkeit der aus diesen Polymeren hergestellten Fasern.

Es hat sich nun überraschenderweise gezeigt, dass die vorteilhafte Auswahl der Polymere anhand der Katalysatoren, die bei ihrer Herstellung verwendet wurden, dazu führt, dass die resultierenden Bikomponentenfasern eine Kombination der Vorteile der Verwendung der jeweiligen Katalysatortypen ermöglicht. So ist es möglich, die Kosten gegenüber der Verwendung reiner mittels Metallocen-Katalysatoren hergestellter Polymerfasern zu senken, dabei jedoch gleichzeitig die Vorteile der Verwendung von Metallocen-Katalysatoren zu verwirklichen. Zusätzlich kann dabei noch eine bessere Verbindbarkeit der Fasern im Vergleich zu Fasern aus Polymeren, die ausschließlich unter Verwendung von Metallocen-Katalysatoren erzeugt wurden, erzielt werden.

Vorzugsweise ist der Massenanteil der Komponente, deren Polymer mit einem Metallocen-Katalysator polymerisiert worden ist, an der Bikomponentenfaser höchstens 50 %, weiter vorzugsweise höchstens 25 %, bevorzugt höchstens 10 %, insbesondere höchstens 5 %. Dabei ist die Bikomponentenfaser besonders bevorzugt eine Kern-Mantel-Faser, wobei die Komponente, deren Polymer mit einem Metallocen-Katalysator polymerisiert worden ist, den Mantel bildet.

Vorteilhafterweise handelt es sich bei dem ersten Polymer und/oder dem zweiten Polymer um ein Polyolefin oder ein Polyolefin-Copolymer, vorzugsweise um ein Polymer und/oder Copolymer des Ethylen, Propylen, Buthylen, Hexen oder Octen und/oder eine Mischung und/oder einen Blend daraus. Es hat sich gezeigt, dass diese Polymere besonders gut geeignet sind, um die erfindungsgemäßen Bikomponentenfasern daraus herzustellen. Unter einem Copolymer ist in diesen Zusammenhang ein Polymer zu verstehen, das aus mindestens zwei verschiedenen Sorten von Monomeren hergestellt wurde, wobei der Massenanteil des Monomers, welches für die Benennung des Copolymers maßgeblich ist, mindestens 50 % beträgt.

Vorzugsweise kann es sich bei dem ersten Polymer und/oder bei dem zweiten Polymer um Polyethylenterephthalat (PET) und/oder einen Polyethylenterephthalat-Copolymer handeln, insbesondere besteht das erste und/oder das zweite Polymer aus PET und/oder Co-PET.

Besonders bevorzugt ist für die Bikomponentenfaser eine Materialzusammensetzung für die erste und die zweite Komponente von Polypropylen und/oder Polyethylen und Polyethylenterephthalat und/oder Polyethylenterephthalat-Copolymer. Hierbei kann entweder das erste oder das zweite Polymer Polyproplyen und/oder Polyethylen aufweisen und/oder daraus bestehen. Je nachdem, ob das erste oder das zweite Polymer PP und/oder PE aufweist, so weist das nicht PP und/oder PE aufweisende zweite oder erste Polymer PET und/oder Co-PET auf und/oder besteht daraus. Weist folglich das erste Polymer PP und/oder PET auf, so weist das zweite Polymer PET und/oder Co-PET auf und vice versa.

Gemäß einer ganz besonders bevorzugten Ausführungsform ist vorgesehen, dass die Bikomponentenfaser als Kern-Mantel-Faser ausgebildet ist, wobei der Kern als Material Polyactide (PLA) aufweist und/oder der Mantel als Material Polyethylenterephthalat und/oder Polyethylenterephthalat-Copolymer aufweist. Insbesondere kann mit einem derartigen Aufbau der Bikomponentenfaser die benötigte Hydrolysebeständigkeit gewährleistet werden.

Vorzugsweise ist die Bikomponentenfaser eine Kern-Mantel-Faser, wobei der Massenanteil des Kerns 50 % bis 98 %, bevorzugt 60 % bis 95 %, besonders bevorzugt 70 % bis 95 %, ganz besonders bevorzugt 80 % bis 90 % ist. Es hat sich gezeigt, dass die Vorteile der erfindungsgemäßen Bikomponentenfaser, wenn es sich bei dieser um eine Kern-Mantel-Faser handelt, in besonderem Maße bei diesen vorteilhaften Massenteilen des Kerns auftreten.

Bei einer weiteren bevorzugten Ausführungsform ist die Bikomponentenfaser als Kern-Mantel-Faser ausgebildet, wobei der Kern als Material Polyethylenfuranoat (PEF) aufweist und/oder der Mantel als Material Polyethylenterephthalat-Copolymer, insbesondere bei einem Schmelzpunkt von 240 °C +/- 10 °C, aufweist. Insbesondere ist Polyethylenfuranoat aus zumindest im Wesentlichen 100 % nachwachsenden Rohstoffen ausgebildet, wodurch eine hohe ökologische Kompatibilität erreicht werden kann. Polyethylenfuranoat kann einen Schmelzpunkt von 235 °C +/- 10 °C aufweisen. Aufgrund der hohen Steifigkeit Polyethylenfuranoat, insbesondere im Vergleich zu PET, kann bei einer eine Bikomponentenfaser der vorgenannten Art aufweisenden Schutzschicht eine besonders zugsteife Vliesschicht erwartet werden.

Vorzugsweise weist die innere Schutzschicht eine Bikomponentenfaser auf, die als erstes Polymer Polyethylenterephthalat und als zweites Polymer Polyethylenterephthalat-Copolymer und/oder Polyethylen und/oder Polypropylen aufweist.

Handelt es sich bei der Bikomponentenfaser um eine Side-by-Side-Faser, Segmented-Pie-Faser oder Islands-in-the-Sea-Faser liegt das Massenverhältnis der beiden Komponenten im Bereich von 10 : 90 bis zu 90 : 10, bevorzugt im Bereich von 70 : 30 bis zu 30 : 70, besonders bevorzugt im Bereich von 60 : 40 bis zu 40 : 60, liegt. Bei diesen Fasertypen hat sich gezeigt, dass sich die Vorteile der erfindungsgemäßen Bikomponentenfaser besonders gut für die aufgeführten Komponentenverhältnisse erzielen lassen.

Bei einer anderen bevorzugten Ausführungsform handelt es sich bei der Bikomponentenfaser um eine multilobale, insbesondere um eine tetralobale oder trilobale Faser. Diese Fasern bieten aufgrund ihrer Querschnittsgeometrie eine höhere spezifische Oberfläche als vergleichbare Fasern mit kreisrunden Querschnitten. In Verbindung mit diesen lassen sich die Vorteile der erfindungsgemäßen Fasern besonders effizient ausnutzen, insbesondere dann, wenn die unterschiedlichen Eigenschaften der Komponenten, die durch die erfindungsgemäße Bikomponentenfaser optimiert werden sollen, Eigenschaften sind, welche die Oberfläche der Faser betreffen.

Vorteilhafterweise beträgt der Durchmesser der Bikomponentenfaser zwischen 1 µm und 50 µm, bevorzugt zwischen 5 µm und 30 µm, besonders bevorzugt zwischen 8 µm und 20 µm. Es hat sich gezeigt, dass gerade bei Faserdurchmessern, die in diesen vorteilhaften Bereichen liegen, die Kombination zweier Komponenten in einer Bikomponentenfaser in besonderem Maße zu Synergieeffekten führt.

Insbesondere ist die äußere Schutzschicht und/oder die innere Schutzschicht als ein Spinnvlies mit erfindungsgemäßen Bikomponentenfasern ausgebildet. Das Spinnvlies kann dabei die nachfolgend beschriebenen Vorteile und/oder Eigenschaften aufweisen.

Durch die Verwendung des Bikomponenten-Aufbaus der als Vliesschicht ausgebildeten inneren und/oder äußeren Schutzschicht kann eine höhere Festigkeit, insbesondere eine um bis zu 20 % verbesserte Festigkeit, im Vergleich zu einem Polypropylen-Spinnvlies erreicht werden. Des Weiteren können sehr gute Witterungsstabilitätseigenschaften, insbesondere verbesserte UV- und Hydrolyse-Eigenschaften, bereitgestellt werden.

Zwei Eigenschaften, die bei Spinnvliesen eine besondere Rolle spielen, sind die spezifische Reißkraft des Spinnvlieses sowie die spezifische Nagelausreißkraft des Spinnvlieses. Dabei wird eine wünschenswerte hohe spezifische Reißkraft durch Fasern mit hoher Festigkeit erreicht.

Unter guter Verbindbarkeit ist in diesem Sinne zu verstehen, dass sich beim Verbinden der Fasern während der Herstellung eines Spinnvlieses die Beweglichkeit der Fasern im Spinnvlies möglichst definiert einstellen lässt. Die gezielte Einstellung der Beweglichkeit der Fasern im Vlies, welche von der Stärke der Verbindung der Fasern untereinander abhängt, ist die Voraussetzung für die Herstellung eines Spinnvlieses mit hoher spezifischer Reißfestigkeit und gleichzeitig hoher spezifischer Nagelausreißkraft.

In der Praxis kann das Problem bestehen, dass geeignete Fasern mit hoher Festigkeit eine schlechte Verbindbarkeit aufweisen und Fasern mit einer guten Verbindbarkeit lediglich eine niedrige Festigkeit aufweisen. Daher ist gerade im Falle der Herstellung eines Spinnvlieses, welches sowohl eine hohe spezifische Reißkraft als auch eine hohe spezifische Nagelausreißkraft aufweisen soll, der Einsatz einer Bikomponentenfaser sinnvoll. Dabei eignet sich in besonderem Maße die erfindungsgemäßen Bikomponentenfasern dazu, eine hohe spezifische Reißkraft und eine hohe spezifische Nagelausreißkraft eines Spinnvlieses zu ermöglichen, da gerade die erfindungsgemäßen Bikomponentenfasern im Hinblick auf eine Kombination aus guter Verbindbarkeit und hoher Festigkeit optimiert werden können.

Ein solcher aus den erfindungsgemäßen Fasern hergestellter Vliesstoff eignet sich für zahlreichen Anwendungen, beispielsweise in der Medizin, im Hygienebereich, in der Automobilindustrie, im Bekleidungsbereich, in Heim- und technischen Textilien sowie insbesondere im Baubereich und der Landwirtschaft. Erfindungsgemäß überschneidet sich der Anwendungsbereich des Vliesstoffes mit dem Anwendungsbereich der Verbundfolie. Mögliche Anwendungen umfassen des weiteren die Verwendung in Filter und Membranen, Batterieseparatoren sowie als Stützvlies für Laminate und als Träger für Beschichtungen aller Art.

Vorteilhafterweise beträgt die spezifische Reißkraft des Spinnvlieses mindestens 1,8 N/g · 5 cm in Maschinenrichtung und/oder mindestens 1,3 N/g · 5 cm in Querrichtung, vorzugsweise 2,0 N/g · 5 cm in Maschinenrichtung und/oder mindestens 1, 5 N/g · 5 cm in Querrichtung, bevorzugt mindestens 2,2 N/g · 5 cm in Maschinenrichtung und/oder mindestens 2,0 N/g · 5 cm in Querrichtung, besonders bevorzugt mindestens 2,4 N/g · 5 cm in Maschinenrichtung und/oder mindestens 1,9 N/g · 5 cm in Querrichtung. Die spezifische Reißkraft wird dabei gemessen nach EN 12311-1.

Es hat sich gezeigt, dass diese vorteilhaften Mindestwerte für die spezifische Reißkraft des Spinnvlieses jedenfalls angestrebt werden sollten, wenn erfindungsgemäße Bikomponentenfasern für die Herstellung des Spinnvlieses verwendet werden. Die erfindungsgemäßen Bikomponentenfasern erlauben es, diese vorteilhaften Mindestwerte für die spezifische Reißkraft zu erzielen, ohne dass dabei die spezifische Nagelausreißkraft unverhältnismäßig absinkt.

Vorteilhafterweise beträgt die spezifische Nagelausreißkraft des Spinnvlieses mindestens 1,0 N/g in Maschinenrichtung und/oder mindestens 1,2 N/g in Querrichtung, vorzugsweise mindestens 1,4 N/g in Maschinenrichtung und/ oder mindestens 1,5 N/g in Querrichtung, bevorzugt mindestens 1,6 N/g in Maschinenrichtung und/oder mindestens 1,8 N/g in Querrichtung, besonders bevorzugt mindestens 1,8 N/g in Maschinenrichtung und/oder mindestens 2,1 N/g Querrichtung.

Die spezifische Nagelausreißkraft ist dabei die maximale Kraft, die beim Zerreißen eines Vliesstreifens auftritt, wenn der Vliesstreifen bereits eine gegebene Beschädigung, nämlich einen durch den Vliesstoff gestoßenen Nagel, aufweist. Gemessen wird die spezifische Nagelausreißkraft nach EN 12310-1. Es hat sich gezeigt, dass die genannten Mindestwerte für die spezifische Nagelausreißkraft des Spinnvlieses angestrebt werden können, ohne dass die spezifische Reißkraft des Spinnvlieses unverhältnismäßig absinkt, wenn erfindungsgemäße Bikomponentenfasern entsprechend hinsichtlich ihrer Verbindbarkeit und Festigkeit optimiert werden. Insbesondere ist es dabei auch möglich, eine Kombination der genannten spezifischen vorteilhaften Nagelausreißkräfte und der zuvor genannten, vorteilhaften spezifischen Mindestreißkräfte zu realisieren.

Die Kombination dieser beiden vorteilhaften Mindestparameter führt zu einem Spinnvlies, welches im Hinblick auf seine mechanischen Eigenschaften für eine Vielzahl von Anwendungen geeignet ist. Ein derartiges Spinnvlies kann beispielsweise gut im Baubereich eingesetzt werden, wo häufig eine Befestigung der Spinnvliesbahnen durch Nageln, Tackern oder Schrauben möglich sein muss. Das Spinnvlies darf dabei nicht ab- oder ausreißen, wenn es beispielsweise auf einem Dach befestigt wird. Auch ist eine Verwendung dieser vorteilhaften Spinnvliese als Geotextilien gut möglich. Geotextilien müssen jedenfalls eine hohe Toleranz für punktuelle Beschädigungen, wie sie beispielsweise durch spitze Steine verursacht werden können, aufweisen.

In der Praxis geht eine hohe spezifische Nagelausreißfestigkeit oft mit einer guten Haptik einher. Die Weichheit und der textile Griff derartiger Spinnvliese und der Verbundfolien eröffnen daher auch Anwendungen, z.B. Anwendungen im Hygiene- oder Medizinbereich. Ursächlich für die gute Haptik ist die hohe Beweglichkeit einzelner Fasern, die regelmäßig mit dem Auftreten hoher Nagelausreißkräfte einhergeht. Fasern, die sich derart verhalten, weisen in der Praxis regelmäßig auch als weich und angenehm empfundene haptische Eigenschaften auf. Die Fasersegmentbeweglichkeit ermöglicht es, dass sich Fasern bei der Bewegung des Nagels durch das Vlies in dem Nagel "sammeln", indem sie den Nagel, der sich durch das Vlies bewegt, ausweichen und nicht sofort zerreißen. Dies führt zu einer Zone erhöhter Faserdichte, also eine Zone erhöhter Festigkeit, um den Nagel.

Erfindungsgemäß kann als Klebstoff für die Klebstoffschicht und/oder die weitere Klebstoffschicht ein thermoplastischer Hotmelt und/oder ein reaktiver Polyurethan Hotmelt (PUR) vorgesehen sein.

Ferner kann eine Vorrichtung zur Herstellung einer wasserdampfdurchlässigen flächigen Verbundfolie vorgesehen sein. Insbesondere ist die Vorrichtung zur Durchführung des erfindungsgemäßen Verfahrens gemäß einer der zuvor genannten Ausführungsformen ausgebildet. Die Vorrichtung weist eine erste Walze und eine zweite Walze auf. Des Weiteren umfasst die Vorrichtung eine Düsenanordnung zum Auftrag eines Klebstoffes, insbesondere zur Applikation der Klebstoffschicht. Erfindungsgemäß ist vorgesehen, dass die Düsenanordnung eine Mehrzahl von, insbesondere quer zur Förderrichtung, derart angeordneten und voneinander beabstandeten Düsenöffnungen aufweist, dass der Klebstoff in Form einer Mehrzahl von in Förderrichtung verlaufenden Längsstreifen aufbringbar ist. Dabei sind die Düsenöffnungen derart voneinander beabstandet, dass sich zwischen benachbarten Längsstreifen ein Abstand zwischen 1 mm und 20 mm ergibt.

Letztlich entspricht die Förderrichtung auch der Längsrichtung der Trägerschicht der Verbundfolie. Eine Anordnung quer zur Förderrichtung ist dabei insbesondere derart zu verstehen, dass sich die Düsenordnung zumindest im Wesentlichen quer zur Fördereinrichtung anordnen kann - das heißt insbesondere in einem Winkel von 90° ± 30°. Hierbei kann sich eine Anordnung der Düsenöffnungen derart ergeben, dass sie quer zur Haupterstreckung der Verbundfolie bzw. der Trägerschicht angeordnet sind.

Zur Vermeidung von unnötigen Wiederholungen darf auf die vorstehenden Ausführungen zu der Verbundfolie und zu dem erfindungsgemäßen Verfahren zur Herstellung der wasserdampfdurchlässigen Verbundfolie verwiesen werden, die in gleicher Weise auch für die Vorrichtung gelten. Insbesondere darf auf die eingangs geschilderten Vorteile und besonderen Ausgestaltungen der Verbundfolie und des erfindungsgemäßen Verfahrens verwiesen werden.

Durch die Mehrzahl der voneinander beabstandeten Düsenöffnungen gelingt es, dass letztlich in einem Verfahrensschritt die streifenförmige Ausbildung der Klebstoffschicht erzeugt werden kann, insbesondere wobei sich die streifenförmige Ausrichtung in der Haupterstreckung der Verbundfolie bzw. in Förderrichtung ergibt. Somit gelingt auf konstruktionstechnisch sehr einfachem Wege, eine Verbundfolie bereit zu stellen, die eine verbesserte Wasserdampfdurchlässigkeit im Vergleich zu aus dem Stand der Technik bekannten Verbundfolien aufweist.

Vorzugsweise ist vorgesehen, dass die Düsenanordnung wenigstens eine quer zur Förderrichtung ausgerichtete bzw. angeordnete Breitschlitzdüse mit einer Mehrzahl von voneinander beabstandeter Düsenöffnungen aufweist. Die Breitschlitzdüse ist dabei derart ausgebildet, dass eine dünne Klebstoffschicht mit Längsstreifen auf die bahnförmige Trägerschicht aufgetragen werden kann. Dabei arbeitet die Breitschlitzdüse nicht nur verlässlich, sondern ist auch leicht zu bedienen.

Auch eine Blasenfreiheit der Klebstoffschicht kann durch die Breitschlitzdüse sichergestellt werden. Die Breitschlitzdüse kann insbesondere derart ausgebildet sein, dass die Arbeitsbreite zumindest im Wesentlichen der Breite der Trägerschicht entspricht. Des Weiteren kann vorgesehen sein, dass die Breite der Breitschlitzdüse kleiner ist als die Breite der Trägerschicht, was insbesondere bei einer sich hin und her bewegenden Breitschlitzdüse von Vorteil ist. So kann sichergestellt werden, dass ein Auftrag des Klebstoffs lediglich auf der Oberfläche der Trägerschicht erfolgt, so dass sich kein Verlust von Klebstoff bei der Produktion ergibt.

Insbesondere kann die Breitschlitzdüse geschlossene und offene kammartige Segmente aufweisen, die im Innern der Düse angeordnet sind. Die offenen Segmente weisen die Düsenöffnungen der Düsenanordnung auf und/oder bilden diese. Letztlich kann durch die offenen Segmente ein Austritt des Klebstoffs ermöglicht werden, wobei die geschlossenen Segmente der Breitschlitzdüse die Beabstandung der Längsstreifen der Klebstoffschicht sicherstellen.

Vorzugsweise ist ein offenes Segment der Breitschlitzdüse unmittelbar benachbart zu wenigstens einem geschlossenen Segment vorgesehen. Vorzugsweise ist ferner eine alternierende Anordnung der offenen und der geschlossenen Segmente vorgesehen. Mehrere oder alle Segmente können auch Teil einer einstückigen Leiste sein, die in die Breitschlitzdüse einsetzbar und darin montierbar ist. Vorteilhaft an einer derartigen Breitschlitzdüse ist, dass für im Stand der Technik bekannte und auch benutzte Breitschlitzdüsen ein separater Einsatz bereitgestellt werden kann, der die offenen und geschlossenen kammartigen Segmente aufweist und somit die streifenförmige Ausbildung der Klebstoffschicht auf der Trägerschicht ermöglicht.

Ferner können mehrere oder alle Segmente durch ein als Kamm ausgebildetes Trennmittel gebildet werden, insbesondere wobei das Trennmittel in die Breitschlitzdüse einlegbar ist.

Demgemäß kann auf vergleichsweise einfache Art eine Breitschlitzdüse zu einer erfindungsgemäßen Breitschlitzdüse "umgerüstet" werden.

Erfindungsgemäß ist es nicht zwingend erforderlich, vollständig neue Breitschlitzdüsen bei einer bereits eingesetzten Vorrichtung zur Herstellung einer wasserdampfdurchlässigen Verbundfolie einzubauen, sondern eine Nachrüstung kann gewährleistet werden. Dies zeigt sich im Hinblick auf eine Umsetzung der erfindungsgemäßen Vorrichtung und des Verfahrens als besonders kostensparend.

Alternativ ist es auch möglich, dass die Düsenanordnung eine Mehrzahl separater, nebeneinander angeordneter und voneinander beabstandeter Einzeldüsen aufweist. Die Ausbildung der Einzeldüsen ist insbesondere eine erfindungsgemäße Alternative zu der die kammartigen Segmente aufweisenden Breitschlitzdüse. Die voneinander beabstandeten Einzeldüsen können zudem sicher gewährleisten, dass ein Auftrag des Klebstoffs in Förderrichtung bzw. in Längsrichtung der Trägerschicht erfolgt. Die Einzeldüsen können ferner miteinander verbunden sein, so dass sie insbesondere auch gemeinsam hin und her bewegbar sind.

Bei einer weiteren besonders bevorzugten Ausführungsform ist vorgesehen, dass die erste und die zweite Walze einen Walzenspalt zum Verpressen des Schichtaufbaus der Verbundfolie bilden. Insbesondere ist der Walzenspalt zur Verpressung des Schichtaufbaus aus wenigstens der Funktionsschicht, der Trägerschicht und der Klebstoffschicht vorgesehen. In dem Walzenspalt kann die feste Verbindung der Schichten bzw. der Lagen des Schichtaufbaus untereinander erfolgen.

Darüber hinaus ist bei einer weiteren bevorzugten Ausgestaltung eine weitere Düsenanordnung zum Auftrag eines weiteren Klebstoffs vorgesehen. Insbesondere weist die weitere Düsenanordnung eine Mehrzahl von, vorzugsweise quer zur Förderrichtung, derart angeordneten und voneinander beabstandeten Düsenöffnungen auf, so dass der weitere Klebstoff in Form einer Mehrzahl von in Förderrichtung verlaufenden Längsstreifen aufbringbar ist.

Die zuvor genannten bevorzugten Ausführungsformen der Düsenanordnung gelten in gleicher Weise erfindungsgemäß auch für die weitere Düsenanordnung. In diesem Zusammenhang sei zur Vermeidung von unnötigen Wiederholungen auf die vorherigen Ausführungen verwiesen.

Durch die weitere Düsenanordnung gelingt es, die Funktionsschicht beidseitig mit wenigstens einer Trägerschicht zu versehen, so dass die Funktionsschicht der Verbundfolie beidseitig geschützt ist, insbesondere vor mechanischen Beanspruchungen. Die erfindungsgemäße Ausbildung der weiteren Düsenanordnung zeigt sich dahingehend als vorteilhaft, da die durch den weiteren Klebstoff gebildete weitere Klebstoffschicht ebenfalls nicht vollflächig über die Oberfläche der Trägerschicht ausgebildet ist und somit den niedrigen sd-Wert bzw. die hohe Wasserdampfdurchlässigkeit sicherstellt.

Auf die vorteilhafte Ausbildung der durch den Klebstoff gebildeten Klebstoffschicht und der durch den weiteren Klebstoff gebildeten weiteren Klebstoffschicht ist bereits im Zusammenhang mit der erfindungsgemäßen Verbundfolie und dem erfindungsgemäßen Verfahren ausführlich eingegangen worden.

Vorzugsweise ist die weitere Düsenanordnung in Förderrichtung nachfolgend zur Düsenanordnung angeordnet - das heißt letztlich also in Förderrichtung hinter der Düsenanordnung vorgesehen. Insbesondere ist die weitere Düsenanordnung dem Walzenspalt und/oder einem weiteren Walzenspalt vorgeschaltet - das heißt in Förderrichtung vor dem Walzenspalt und/oder dem weiteren Walzenspalt angeordnet.

Eine Anordnung der weiteren Düsenanordnung vor dem Walzenspalt zeigt sich als vorteilhaft, wenn in dem Walzenspalt, der durch die erste und zweite Walze gebildet wird, nicht nur der Schichtverbund aus wenigstens der Funktionsschicht, der Klebstoffschicht und der Trägerschicht verpresst werden soll, sondern auch die weitere Trägerschicht sowie die weitere Klebstoffschicht mit dem vorgenannten Schichtaufbau in einem Verfahrensschritt verpresst werden soll.

Alternativ oder zusätzlich kann auch vorgesehen sein, dass ein weiterer Walzenspalt, der durch weitere Walzen gebildet wird, für eine Verpressung des Schichtaufbaus aus wenigstens der Funktionsschicht, der Trägerschicht und der Klebstoffschicht mit der weiteren Klebstoffschicht und der weiteren Trägerschicht vorgesehen ist. Insbesondere kann in dem weiteren Walzenspalt, der bereits gepresste Schichtaufbau aus wenigstens der Funktionsschicht, der Trägerschicht und der Klebstoffschicht mit der weiteren Klebstoffschicht und der weiteren Trägerschicht verpresst werden.

Ferner ist bei einer weiteren bevorzugten Ausführungsform vorgesehen, dass eine Stelleinrichtung für die Düsenanordnung und/oder die weitere Düsenanordnung vorgesehen ist, wobei die Stelleinrichtung derart ausgebildet ist, dass sie die Düsenanordnung und/oder die weitere Düsenanordnung quer zur Förderrichtung zur Hin- und Herbewegung verstellen kann. Letztlich kann die Stelleinrichtung insbesondere ermöglichen, dass eine changierende Bewegung der Düsenanordnung und/oder der weiteren Düsenanordnung erfolgt. Dabei verfügt die Stelleinrichtung dann über eine Einrichtung, die ein Schwingen bzw. Changieren der Düsenanordnung und bedarfsweise auch der weiteren Düsenanordnung mit einer vorgegebenen Frequenz ermöglicht.

Vorzugsweise ist wenigstens eine Corona-Vorbehandlungseinrichtung vorgesehen, die zur Corona-Vorbehandlung der Oberfläche der Trägerschicht und/oder der weiteren Trägerschicht der Verbundfolie dient. Die Corona-Vorbehandlungseinrichtung kann dabei der Düsenanordnung und/oder weiteren Düsenanordnung vorgeschaltet sein.

Bevorzugt weist die Vorrichtung eine, insbesondere wenigstens eine Extruderdüse aufweisende, Extrusionseinrichtung zur Extrusion und/oder Coextrusion der Funktionsschicht auf. Die Extrusionseinrichtung kann derart angeordnet sein, dass sie die Funktionsschicht auf die mit dem Klebstoff versehene Trägerschicht aufbringen kann. Letztlich kann die Extrusionsvorrichtung in Förderrichtung dem Walzenspalt vorgeschaltet und/oder in Förderrichtung der Düsenanordnung nachgeschaltet sein.

Ferner kann die Extrusionseinrichtung zum mehrlagigen Auftrag bzw. Extrusion (d. h. Coextrusion) der Funktionsschicht ausgebildet sein.

Im Übrigen versteht es sich, dass in den vorgenannten Intervallen und Bereichsgrenzen jegliche Zwischenintervalle und Einzelwerte enthalten und als erfindungswesentlich offenbart anzusehen sind, selbst wenn diese Zwischenintervalle und Einzelwerte nicht konkret angegeben sind.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen und deren Rückbeziehung.

Es zeigt:
- Fig. 1: eine schematische Darstellung des erfindungsgemäßen Verfahrens,
- Fig. 2: eine schematische Darstellung einer weiteren Ausführungsform des erfindungsgemäßen Verfahrens,
- Fig. 3: eine schematische Darstellung einer weiteren Ausführungsform des erfindungsgemäßen Verfahrens,
- Fig. 4: eine schematische Draufsicht auf eine Trägerschicht,
- Fig. 5: eine schematische Draufsicht auf eine weitere Ausführungsform einer Trägerschicht,
- Fig. 6: eine schematische Draufsicht auf eine weitere Ausführungsform einer Trägerschicht,
- Fig. 7: eine schematische Draufsicht auf eine weitere Ausführungsform einer Trägerschicht,
- Fig. 8: eine schematische Querschnittsansicht einer Verbundfolie,
- Fig. 9: eine schematische Querschnittsansicht einer weiteren Ausführungsform einer Verbundfolie,
- Fig. 10: eine schematische Querschnittsansicht einer weiteren Ausführungsform einer Verbundfolie,
- Fig. 11: eine schematische Querschnittsansicht einer weiteren Ausführungsform einer Verbundfolie,
- Fig. 12: eine schematische perspektivische Darstellung des Auftrags der erfindungsgemäßen Klebstoffschicht,
- Fig. 13: eine schematische perspektivische Darstellung einer weiteren Ausführungsform des Auftrags der erfindungsgemäßen Klebstoffschicht,
- Fig. 14: eine schematische Darstellung der Stelleinrichtung,
- Fig. 15: eine schematische Darstellung der Düsenöffnungen der Breitschlitzdüse,
- Fig. 16: eine schematische Darstellung einer weiteren Ausführungsform des erfindungsgemäßen Verfahrens,
- Fig. 17: eine schematische Darstellung einer weiteren Ausführungsform des erfindungsgemäßen Verfahrens,
- Fig. 18: eine schematische Darstellung einer weiteren Ausführungsform des erfindungsgemäßen Verfahrens,
- Fig. 19: eine schematische perspektivische Darstellung der Verbundfolie und
- Fig. 20: eine schematische perspektivische Darstellung einer weiteren Ausführungsform der Verbundfolie.

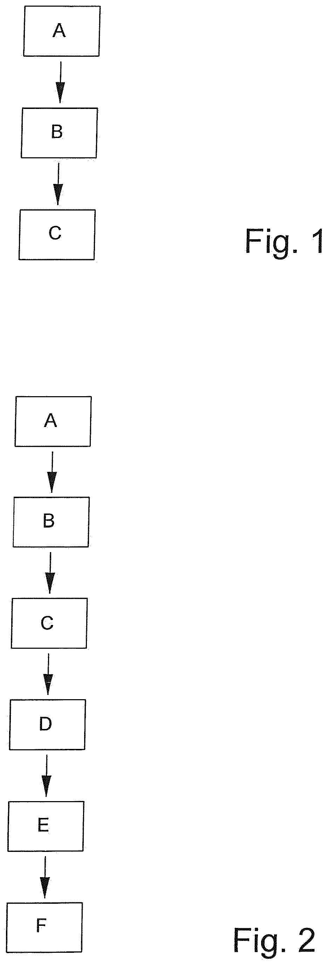

Fig. 1 zeigt schematisch einzelne Schritte des Verfahrens zur Herstellung einer wasserdampfdurchlässigen flächigen Verbundfolie 1.

In Schritt A wird zunächst eine Trägerschicht 4 zugeführt, die in Verfahrensschritt B mittels einer Klebstoffschicht 2 beschichtet wird. Die Klebstoffschicht 2 wird mittels einer Düsenanordnung 3 auf die Trägerschicht 4 aufgetragen. In Verfahrensschritt C wird auf die mit der Klebstoffschicht 2 versehenen Trägerschicht 4 eine, insbesondere monolithische, Funktionsschicht 5 extrudiert.

Alternativ oder zusätzlich kann vorgesehen sein, dass die Funktionsschicht 5 auf die Trägerschicht 4 und/oder auf eine zweite Walze 17 und/oder in einen Walzenspalt 22 extrudiert wird.

In dem Verfahrensschritt C ist die Auftragung der Klebstoffschicht 2 derart vorgesehen, dass die Klebstoffschicht 2 mittels einer Mehrzahl von in Längsrichtung L der Trägerschicht 4 verlaufenden, voneinander beabstandeten Längsstreifen 6 von der Düsenanordnung 3 aufgebracht wird.

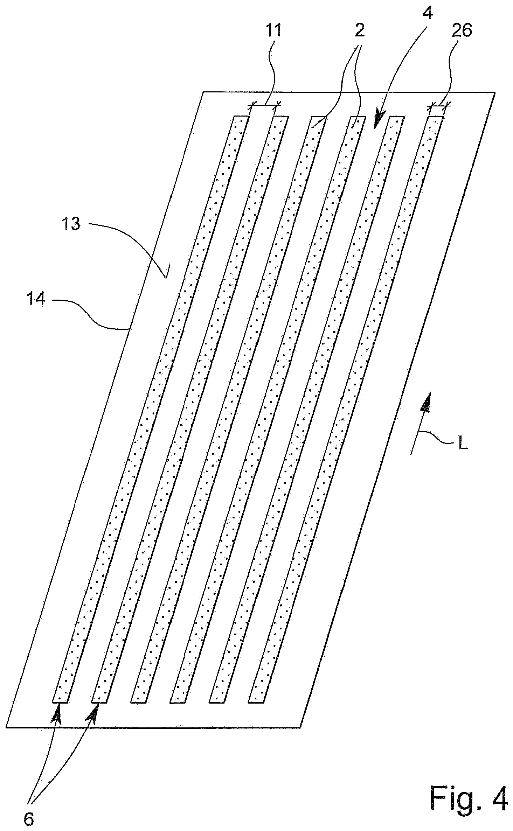

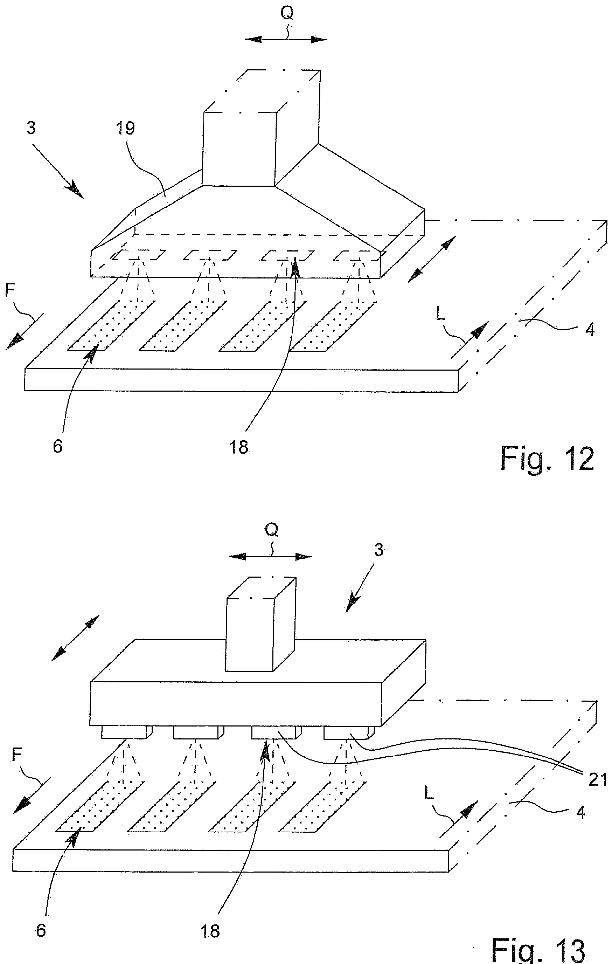

Die in Längsrichtung L verlaufenden Längsstreifen 6 der Klebstoffschicht 2 sind unter anderem in Fig. 4 dargestellt. Ein Auftrag der Klebstoffschicht 2 durch die Düsenanordnung 3 ist darüber hinaus beispielsweise in den Fig. 12 und 13 gezeigt.

Die Düsenanordnung 3 kann als Breitschlitzdüse 19 ausgebildet sein. Nicht dargestellt ist, dass die Breitschlitzdüse 19 auf der Trägerschicht 4 aufliegt und/oder zumindest im Wesentlichen unmittelbar an diese angrenzt und es dadurch zu einem "Klebstoffabriss" kommt.

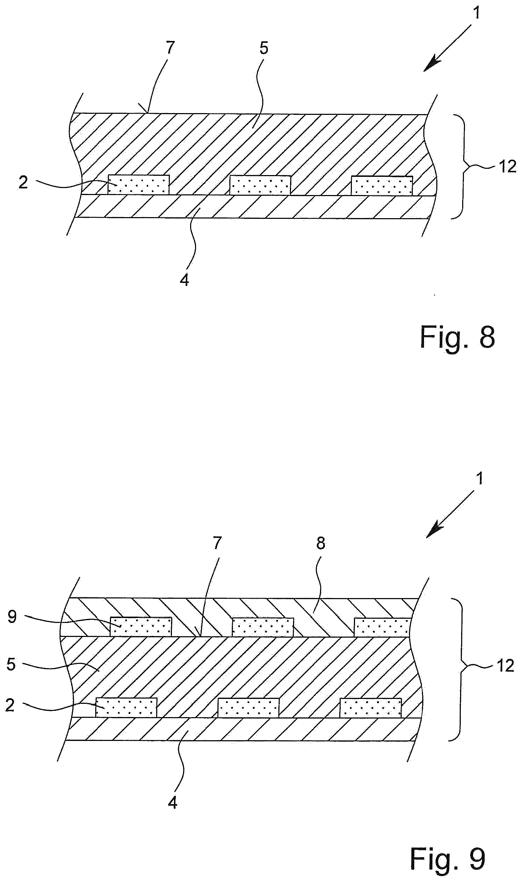

Der in Fig. 2 gezeigte schematische Verfahrensablauf sieht ferner die Anordnung einer weiteren Trägerschicht 8 vor. Die weitere Trägerschicht 8 ist in Fig. 9 gezeigt. Fig. 9 zeigt weiter, dass die weitere Trägerschicht 8 auf der der Trägerschicht 4 abgewandten Seite 7 der Funktionsschicht 5 aufgebracht wird. Die weitere Trägerschicht 8 und die Funktionsschicht 5 sind miteinander über eine weitere Klebstoffschicht 9 verbunden.

Bei dem in Fig. 2 dargestellten Verfahrensablauf entsprechen die Verfahrensschritte A bis C den Verfahrensschritten A bis C der Fig. 1. Nach Extrusion der Klebstoffschicht 2 wird in Verfahrensschritt D auf der Funktionsschicht 5 eine weitere Klebstoffschicht 9 mittels einer weiteren Düsenanordnung 10 durch in Längsrichtung L der Trägerschicht 4 bzw. in Förderrichtung F verlaufende Längsstreifen 6 aufgebracht.

Die Längsstreifen 6 sind voneinander beabstandet, so dass unmittelbar benachbarte Längsstreifen 6 einen Abstand 11 zueinander aufweisen bzw. einschließen.

Nicht dargestellt ist, dass die weitere Klebstoffschicht 9 auch auf die weitere Trägerschicht 8, insbesondere auf der der Funktionsschicht 5 zugewandten Seite der weiteren Trägerschicht 8, aufgebracht werden kann.

In Verfahrensschritt E wird auf die mit der weiteren Klebstoffschicht 9 versehenen Funktionsschicht 5 die weitere Trägerschicht 8 angeordnet, wobei der Schichtenverbund bzw. der Schichtaufbau 12 aus wenigstens der Funktionsschicht 5, der Trägerschicht 4 und der Klebstoffschicht 2 sowie der weiteren Klebstoffschicht 9 und der weiteren Trägerschicht 8 in Verfahrensschritt F verpresst werden.

Nicht dargestellt ist, dass auch vorgesehen sein kann, dass zunächst der Schichtaufbau 12 aus wenigstens der Klebstoffschicht 2, der Funktionsschicht 5 und der Trägerschicht 4 verpresst wird, wobei nachfolgend die Verfahrensschritte D bis F vorgesehen sind.

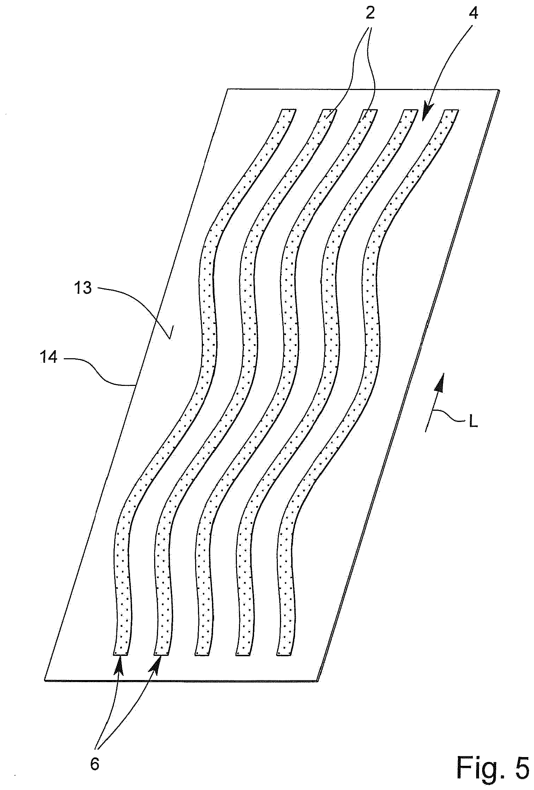

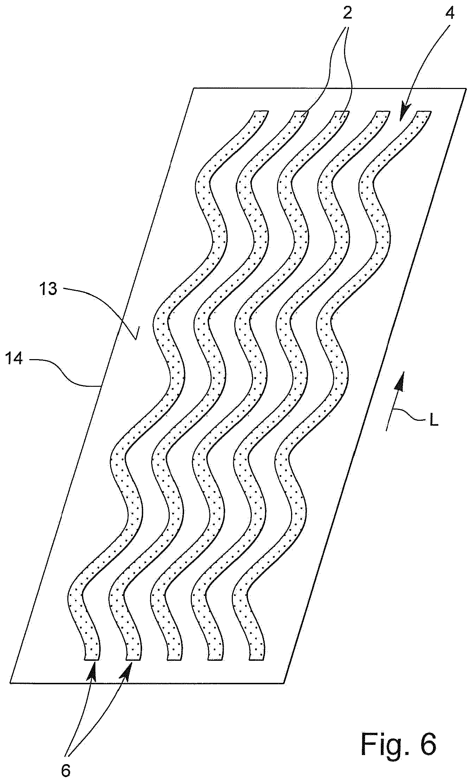

Die Fig. 12 und 13 zeigen durch den Bewegungspfeil in Querrichtung Q schematisch, dass die Düsenanordnung 3 während des Aufbringens der Längsstreifen 6 der Klebstoffschicht 2 quer zur Längsrichtung L bzw. in Förderrichtung F hin und her bewegt wird. Ein Hin- und Herbewegen der Düsenanordnung 3 ergibt dabei beispielsweise eine Ausbildung den Längsstreifen 6, die schematisch aus den Fig. 5 bis 7 ersichtlich ist.

Die Längsstreifen 6 der Ausführungsformen der Fig. 5 bis 7 sind letztlich durch verschiedene Frequenzen beim Changieren bzw. beim Hin- und Herbewegen der Düsenanordnung 3 hergestellt worden.

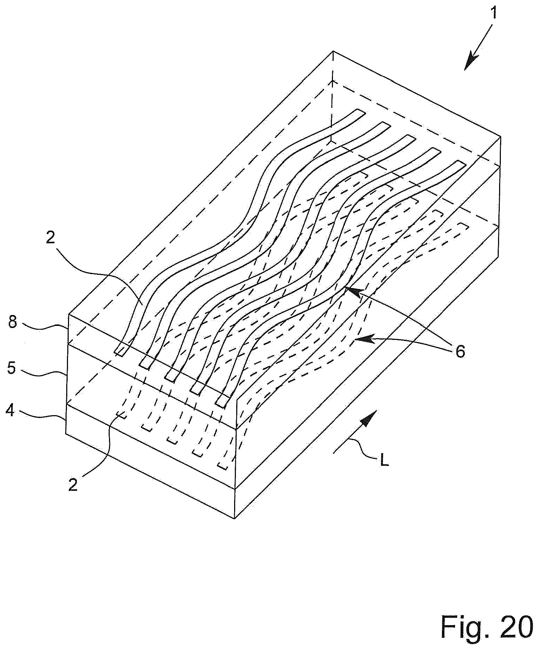

In diesem Zusammenhang ist es letztlich so, dass auch die weitere Düsenanordnung 10 während des Aufbringens der weiteren Klebstoffschicht 9 sich hin und her bewegen kann, wodurch auch ein Auftrag der weiteren Klebstoffschicht 9 in einem zumindest im Wesentlichen wellenförmigen Verlauf erhalten wird. Dies ist zum Beispiel in Fig. 20 dargestellt.

Nicht dargestellt ist, dass der Klebstoff der Klebstoffschicht 2 und/oder der weiteren Klebstoffschicht 9 aufgeschäumt wird. Ein Aufschäumen der Klebstoffschicht 2 kann durch Zugabe eines Treibmittels, insbesondere von Kohlenstoffdioxid, erreicht werden. Insbesondere ist ein Aufschäumen des Klebstoffs nach dem Aufbringen vorgesehen, wodurch Poren in der Klebstoffschicht 2 und/oder der weiteren Klebstoffschicht 9 gebildet werden.

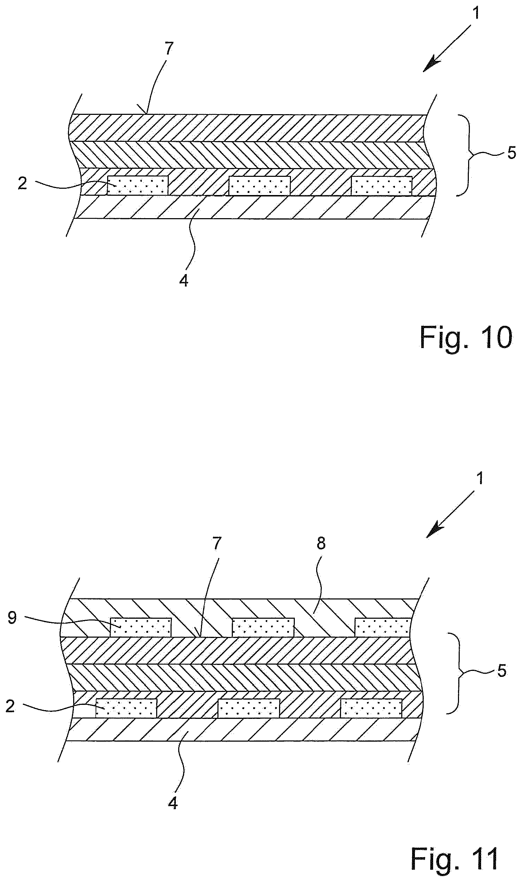

Die Fig. 11 und 20 zeigen schematisch, dass die Längsstreifen 6 der Klebstoffschicht 2 und die Längsstreifen 6 der weiteren Klebstoffschicht 9 derart aufgebracht werden, dass sie sich nach Herstellung der Verbundfolie vollständig oder zumindest bereichsweise überlappen. Ein bereichsweise Überlappen der Längsstreifen 6 der Klebstoffschicht 2 und der weiteren Klebstoffschicht 9 ist anhand des in Fig. 11 dargestellten Querschnitts gezeigt. Durch die vorgenannte Anordnung der Klebstoffschicht 2 und der weiteren Klebstoffschicht 9 sind in Richtung von der Bahnoberseite zur Bahnunterseite Freiräume in der Verbundfolie 1 vorhanden, die weder die Klebstoffschicht 2 noch die weitere Klebstoffschicht 9 aufweisen.

Nicht dargestellt ist, dass die weitere Klebstoffschicht 9 mit einer anderen Frequenz der weiteren Düsenanordnung 10 beim Hin- und Herbewegen im Vergleich zur Frequenz des Hin- und Herbewegens der Düsenanordnung 3 aufbringbar ist. Letztlich können so unterschiedliche Wellenformen der Längsstreifen 6 erzeugt werden.

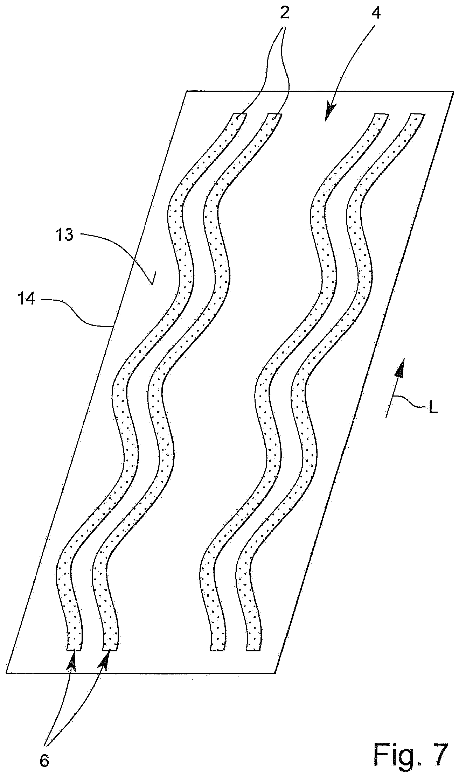

Fig. 7 zeigt schematisch, dass die Längsstreifen 6 der Klebstoffschicht 2 lediglich bereichsweise auf die Trägerschicht 4 aufgebracht werden können, beispielsweise in den Längs-Randbereichen.

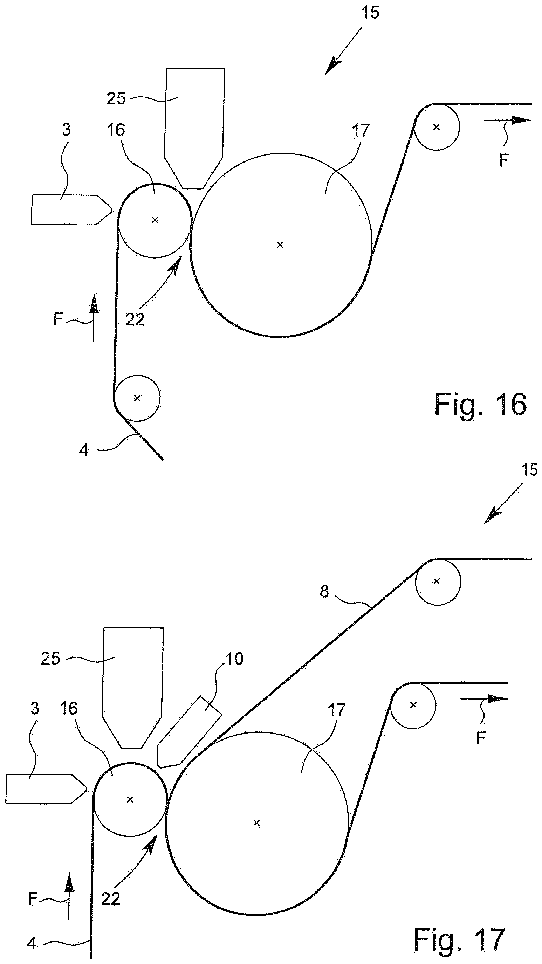

Fig. 16 zeigt schematisch, dass die Trägerschicht 4 einer ersten Walze 16 zugeführt wird. Bei oder nach Zuführung zu der ersten Walze 16 kann auf die Trägerschicht 4 die Klebstoffschicht 2 durch die Düsenanordnung 3 aufgebracht werden. Anschließend erfolgt ein Extrudieren bzw. eine Coextrusion der Funktionsschicht 5. Die Extrusion der Funktionsschicht 5 kann dabei derart durchgeführt werden, dass ein mehrlagiger Schichtaufbau der Funktionsschicht 5 erzeugt wird. Nach Aufbringen der Funktionsschicht 5 wird bei dem in Fig. 16 dargestellten Verfahrensablauf der Schichtaufbau 12 aus wenigstens der Funktionsschicht 5, der Klebstoffschicht 2 und der Trägerschicht 4 verpresst. Die Verpressung ist hierbei in einem Walzenspalt 22 vorgesehen, der durch das Zusammenwirken der ersten Walze 16 mit einer zweiten Walze 17 gebildet wird.

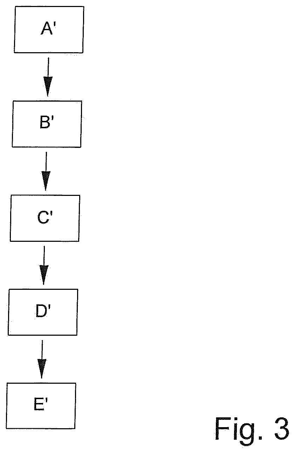

Bei dem in Fig. 3 dargestellten Verfahrensablauf ist vorgesehen, dass die Schritte A' bis C' letztlich den Verfahrensschritten A bis C des in Fig. 1 gezeigten Verfahrensablaufes entsprechen. Nach Extrusion der Funktionsschicht 5 in Verfahrensschritt C' ist ein Verpressen des Schichtaufbaus 12 in Verfahrensschritt D' vorgesehen. Nach Verpressen des Schichtaufbaus 12 ist in Verfahrensschritt E' eine Kühlung des gepressten Verbundes bzw. des gepressten Schichtaufbaus 12 vorgesehen.

Nicht dargestellt ist, dass eine Corona-Vorbehandlung der Oberfläche der Trägerschicht 4 und/oder der weiteren Trägerschicht 8 erfolgt. Die Corona-Vorbehandlung der Trägerschicht 4 erfolgt insbesondere in Förderrichtung F vor der Aufbringung der Klebstoffschicht 2. Eine Corona-Vorbehandlung der weiteren Trägerschicht 8 kann vor Aufbringung der weiteren Klebstoffschicht 9 erfolgen.

Die Fig. 8 bis 11 zeigen eine wasserdampfdurchlässige flächige Verbundfolie 1. Die Verbundfolie 1 kann nach einem Verfahren der vorgenannten Art hergestellt werden. Die Verbundfolie 1 weist eine Trägerschicht 4, eine auf die Trägerschicht 4 aufgebrachte Klebstoffschicht 2 und eine, vorzugsweise monolithische, Funktionsschicht 5 auf.

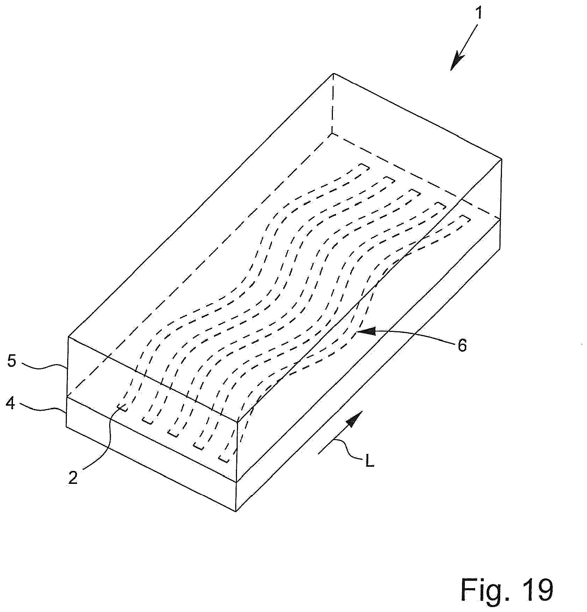

Die Klebstoffschicht 2 weist eine Mehrzahl von in Längsrichtung L der Verbundfolie 1 verlaufenden Längsstreifen 6 auf, wobei unmittelbar benachbarte Längsstreifen 6 voneinander beabstandet sind. Die Längsstreifen 6 der Verbundfolie 1 sind dabei beispielsweise aus den Fig. 19 und 20 ersichtlich.

Fig. 4 zeigt, dass unmittelbar benachbarte Längsstreifen 6 einen Abstand 11 von 1 mm bis 20 mm aufweisen. Die Streifenbreite 26 kann zwischen 1 mm bis 50 mm liegen.

Insbesondere ist vorgesehen, dass der Abstand 11 und/oder die Streifenbreite 26 der Längsstreifen 6 der Klebstoffschicht 2 und/oder einer weiteren Klebstoffschicht 9 zumindest im Wesentlichen gleich ausgebildet ist und/oder zueinander jeweils um maximal ± 5% abweicht.

Fig. 4 zeigt schematisch, dass wenigstens ein Längsstreifen 6 der Klebstoffschicht 2, im dargestellten Ausführungsbeispiel alle Längsstreifen 6 der Klebstoffschicht 2, parallel zu einem Längsrand 14 der Trägerschicht 4 verlaufen. In den Fig. 5 bis 7 ist ein wellenförmiger Verlauf der Längsstreifen 6 der Klebstoffschicht 2 vorgesehen, wobei die Haupterstreckungsrichtung der Wellen ebenfalls parallel zum Längsrand 14 ist.

Nicht dargestellt ist, dass die Längsstreifen 6 der Klebstoffschicht 2 als segmentartiger bzw. unterbrochener Streifen ausgebildet sein können. Letztlich können die Längsstreifen 6 der Klebstoffschicht 2 punktförmig und/oder rasterförmig ausgebildet bzw. aufgebracht worden sein.

Die unterbrochenen Längsstreifen 6 können durch ein gezieltes Abreißen am Düsenspalt und/oder durch die Düsenanordnung 3 erhaltbar sein.

Bei den in Fig. 5 bis 7 dargestellten Ausführungsformen sind die Längsstreifen 6 als zumindest im Wesentlichen ununterbrochener Streifen ausgebildet. Der ununterbrochene Streifen bzw. Längsstreifen 6 wird durch einen kontinuierlichen Betrieb der Düsenanordnung 3 bei kontinuierlicher Aufbringung der Klebstoffschicht 2 bzw. der einzelnen Längsstreifen 6 erzeugt.

Bei der in Fig. 9 dargestellten Verbundfolie 1 ist vorgesehen, dass diese einen sd-Wert von kleiner oder gleich 0,1 m aufweist. In weiteren Ausführungsformen kann der sd-Wert insbesondere zwischen 0,15 m bis 0,01 m variieren.

Weiter nicht dargestellt ist, dass als Klebstoff für die Klebstoffschicht 2 ein nicht reaktiver und/oder reaktiver und/oder ein thermoplastischer Klebstoff, insbesondere PUR, verwendet werden kann. Darüber hinaus ist nicht dargestellt, dass der Klebstoff aufgeschäumt sein kann, wodurch eine Schaumstruktur (d.h. Poren aufweisend) der Klebstoffschicht 2 vorhanden sein kann.

In den Fig. 9 und 11 ist gezeigt, dass eine weitere Klebstoffschicht 9 im Schichtaufbau 12 der Verbundfolie 1 vorgesehen ist. Die weitere Klebstoffschicht 9 kann, wie in Fig. 20 gezeigt, ebenfalls eine Mehrzahl von in Längsrichtung L der Verbundfolie 1 verlaufenden Längsstreifen 6 aufweisen.

Insbesondere können die Längsstreifen 6 der weiteren Klebstoffschicht 9 entsprechend der vorgenannten möglichen Ausführungsformen der Längsstreifen 6 der Klebstoffschicht 2 ausgebildet sein.

Fig. 20 zeigt, dass die Längsstreifen 6 der Klebstoffschicht 2 zumindest bereichsweise überlappend mit den Längsstreifen 6 der weiteren Klebstoffschicht 9 angeordnet sind. Nicht dargestellt ist, dass die Längsstreifen 6 der Klebstoffschicht 2 auch vollständig überlappend mit den Längsstreifen 6 der weiteren Klebstoffschicht 9 angeordnet sein können.

Dabei versteht es sich, dass die Klebstoffschicht 2 nicht unmittelbar mit der weiteren Klebstoffschicht 9 verbunden sein muss. Zwischen den Klebstoffschichten 2, 9 kann die Funktionsschicht 5 angeordnet sein, wie aus den Fig. 9 und 11 ersichtlich. Darüber hinaus kann die Funktionsschicht 5 auch mehrlagig ausgebildet sein, wie in den Fig. 10 und 11 gezeigt.

Die Lagen der Funktionsschicht 5 können dabei auch unterschiedlich sein, wodurch beispielsweise ein Schichtaufbau der Schichten ABA oder ABB erzeugt werden kann. Die mehrlagige Funktionsschicht 5 kann durch Coextrusion aufgebracht werden.

Als Material für die Funktionsschicht 5 kann thermoplastisches Polyurethan vorgesehen sein. Die verschiedenen Materialzusammensetzungen der Funktionsschicht 5 sind eingangs bereits ausführlich diskutiert worden. In diesem Zusammenhang darf auf die vorherigen Ausführungen verwiesen werden.

Fig. 16 zeigt eine Vorrichtung 15 zur Herstellung einer wasserdampfdurchlässigen flächigen Verbundfolie 1. Insbesondere ist die Vorrichtung 15 zur Durchführung eines Verfahrens gemäß einer der zuvor genannten Ausführungsform vorgesehen. Die Vorrichtung 15 weist eine erste Walze 16 und eine zweite Walze 17 sowie eine Düsenanordnung 3 auf. Die Düsenanordnung 3 ist zum Auftrag eines Klebstoffs vorgesehen.

Die Fig. 12 und 13 zeigen schematisch, dass die Düsenanordnung 3 eine Mehrzahl von Düsenöffnungen 18 aufweist. Benachbarte Düsenöffnungen 18 sind voneinander beabstandet und quer zur Förder- bzw. Produktionsrichtung derart angeordnet, dass der Klebstoff in Form einer Mehrzahl von in Förderrichtung F verlaufenden Längsstreifen 6 aufbringbar ist. Die Aufbringung des Klebstoffs in Längsstreifen 6 ist zudem schematisch auch in den Fig. 12 und 13 dargestellt.

Die Förderrichtung F kann letztlich in Längsrichtung L der Trägerschicht 4 verlaufen.

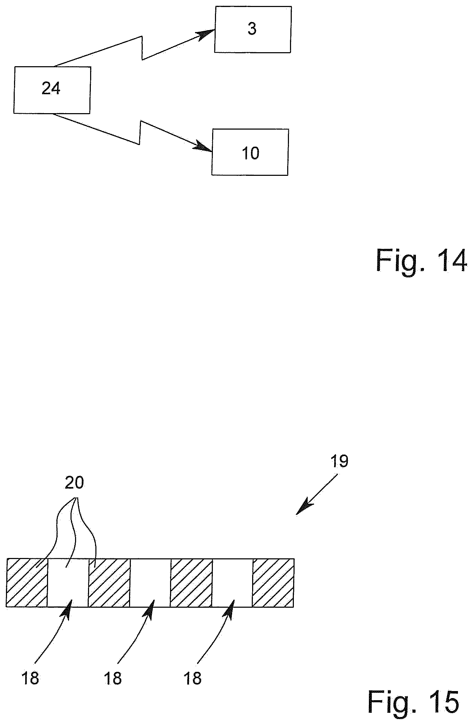

Bei der in Fig. 12 dargestellten Ausführungsform weist die Düsenanordnung 3 wenigstens eine Breitschlitzdüse 19 auf. Die Breitschlitzdüse 19 ist dabei quer zur Förderrichtung F angeordnet. Fig. 15 zeigt schematisch, dass die Breitschlitzdüse 19 offene und geschlossene kammartige Segmente 20 aufweist. Die offenen Segmente 20 bilden die Düsenöffnungen 18, aus denen der Klebstoff aus der Düsenanordnung 3 austritt. Letztlich sind die offenen Segmente 20 sowie die Düsenöffnungen 18 voneinander durch geschlossene kammartige Segmente 20 beabstandet.

Die kammartigen Segmente 20 können durch ein als Kamm ausgebildetes Trennmittel gebildet werden, das in die Breitschlitzdüse 19 einlegbar ist. Durch das Trennmittel ergibt sich der Abstand 11 der Längsstreifen 6 beim Auftrag des Klebstoffs.

Fig. 13 zeigt schematisch, dass die Düsenanordnung 3 eine Mehrzahl separater, nebeneinander angeordneter und voneinander beabstandeter Einzeldüsen 21 aufweist. Aus den jeweiligen Einzeldüsen 21 kann dabei Klebstoff zur Bildung der Klebstoffschicht 2 austreten. Insbesondere sind die Einzeldüsen 21 - wie in Fig. 13 dargestellt - miteinander verbunden, so dass sie beim Changieren auch gemeinsam bewegbar sind.

Fig. 16 zeigt, dass zwischen der ersten Walze 16 und der zweiten Walze 17 ein Walzenspalt 22 gebildet wird, in dem der Schichtaufbau 12 aus wenigstens der Funktionsschicht 5, der Trägerschicht 4 und der Klebstoffschicht 2 verpresst werden kann.

Ferner ist aus Fig. 17 ersichtlich, dass eine weitere Düsenanordnung 10 in Förderrichtung F hinter der Düsenanordnung 3 angeordnet ist. Die weitere Düsenanordnung 10 kann dabei derart angeordnet sein, dass auf die Funktionsschicht 5 eine weitere Klebstoffschicht 9 aufbringbar ist. Letztlich ist auch die weitere Düsenanordnung 10 zum Auftrag eines Klebstoffs vorgesehen. Dabei kann die weitere Düsenanordnung 10 entsprechend wenigstens einer der zuvor genannten Ausführungsformen der Düsenanordnung 3 ausgebildet sein.

Die in Fig. 17 dargestellte weitere Düsenanordnung 10 weist eine Mehrzahl von voneinander beabstandeten Düsenöffnungen 18 auf, so dass der Klebstoff in Form einer Mehrzahl von in Förderrichtung F verlaufenden Längsstreifen 6 aufbringbar ist.

Nicht dargestellt ist, dass die weitere Düsenanordnung 10 den Klebstoff auf die weitere Trägerschicht 8 aufbringen kann. Letztlich kann die weitere Düsenanordnung 10 derart angeordnet sein, dass sie den Klebstoff zur Bildung der weiteren Klebstoffschicht 9 auf die der Trägerschicht 4 abgewandten Seite 7 der Funktionsschicht 5 und/oder auf die weitere Trägerschicht 8 aufbringen kann.

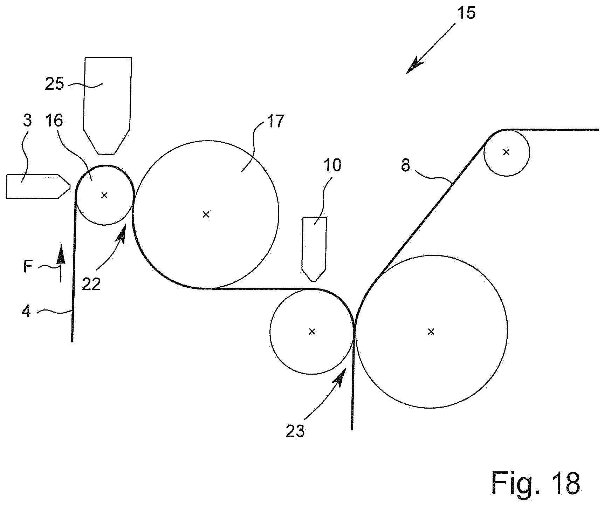

Fig. 17 und 18 zeigen, dass die weitere Düsenanordnung 10 in Förderrichtung nachfolgend zur Düsenanordnung 3 angeordnet ist, wobei in Fig. 17 vorgesehen ist, dass die weitere Düsenanordnung 10 dem Walzenspalt 22 in Förderrichtung F vorgeschaltet ist.

Bei der in Fig. 18 dargestellten Vorrichtung 15 ist vorgesehen, dass die weitere Düsenanordnung 10 dem Walzenspalt 22 in Förderrichtung F nachgeschaltet ist. Die weitere Düsenanordnung 10 ist bei der in Fig. 18 dargestellten Vorrichtung 15 einem weiteren Walzenspalt 23 vorgeschaltet. In dem weiteren Walzenspalt 23, der durch das Zusammenwirken von wenigstens zwei Walzen gebildet wird, kann eine Verpressung des Schichtaufbaus 12 bzw. des bereits gepressten Schichtaufbaus 12 aus wenigstens der Funktionsschicht 5, der Klebstoffschicht 2 und der Trägerschicht 4 mit der weiteren Trägerschicht 8 und der weiteren Klebstoffschicht 9 erfolgen.

Auch hier ist nicht dargestellt, dass die weitere Düsenanordnung 10 den Klebstoff alternativ oder zusätzlich auf die weitere Trägerschicht 8 aufbringen kann.

Fig. 14 zeigt schematisch, dass eine Stelleinrichtung 24 für die Düsenanordnung 3 und die weitere Düsenanordnung 10 vorgesehen ist. Alternativ oder zusätzlich kann die Stelleinrichtung 24 auch lediglich für die Düsenanordnung 3 oder weitere Düsenanordnung 10 vorgesehen sein. Die Stelleinrichtung 24 ist dabei derart ausgebildet, dass sie die Düsenanordnung 3 und/oder die weitere Düsenanordnung 10 quer zur Förderrichtung F zur Hin- und Herbewegung in einer vorgegebenen Frequenz verstellen kann. Letztlich kann die Stelleinrichtung 24 die Bewegung der Düsenanordnung 3 und/oder der weiteren Düsenanordnung 10, wie schematisch aus den Fig. 12 und 13 ersichtlich, steuern und/oder regeln.

Die Düsenanordnung 3 und die weitere Düsenanordnung 10 können letztlich zwei Klebstoffapplikationsstationen bilden.

Nicht dargestellt ist, dass eine Corona-Vorbehandlungseinrichtung vorgesehen sein kann. Die Corona-Vorbehandlungseinrichtung kann derart angeordnet sein, dass sie der Düsenanordnung 3 und/oder der weiteren Düsenanordnung 10 in Förderrichtung F vorgeschaltet ist, so dass letztlich eine Vorbehandlung der Oberfläche der Trägerschicht 4 und/oder der weiteren Trägerschicht 8 vor Anordnung der Klebstoffschicht 2 und/oder der weiteren Klebstoffschicht 9 erfolgen kann.

Ferner zeigen die Fig. 16 bis 18 eine Extrusionseinrichtung 25, die zur Extrusion der Funktionsschicht 5 ausgebildet ist.

Im Übrigen kann die Extrusionseinrichtung 25 derart ausgebildet sein, dass sie eine Coextrusion der Funktionsschicht 5 - das heißt eine mehrlagige Funktionsschicht 5 - erzeugen kann.

Nachfolgend werden Ausführungsbeispiele angegeben.

Vergleichsbeispiel 1 (nicht erfindungsgemäß):
Zwischen zwei Polypropylenvliesen, die eine Grammatur von etwa 70 g/m² und 35 g/m² aufweisen, wird in einem Extrusionsprozess eine Funktionsschicht mit ca. 30 g/m² TPU eingebettet. Als thermoplastisches Polyurethan ist ein aromatischer C4-Ether-TPU vorgesehen. Nach Extrusion der Funktionsschicht wird der Schichtaufbau aus den Trägerschichten (Polypropylenvliese) und der Funktionsschicht verpresst.

Vor der Beschichtung mit der Funktionsschicht bzw. vor Extrusion der Funktionsschicht werden die Polypropylenvliese einer Corona-Vorbehandlung unterzogen.

Durch diesen Aufbau wird folglich eine thermoplastisches Polyurethan aufweisende Funktionsschicht zwischen zwei Polypropylenvliesen angeordnet. Es wird kein Klebstoff zur Verbindung der Funktionsschicht und der Polypropylenvliese verwendet.

Vergleichsbeispiel 2 (nicht erfindungsgemäß):
Zwischen zwei Polypropylenvliesen (Trägerschichten), die eine Grammatur von etwa 70 g/m² und 35 g/m² aufweisen, wird in einem Extrusionsprozess eine Funktionsschicht mit ca. 30 g/m² TPU eingebettet. Als thermoplastisches Polyurethan ist aromatischer C4-Ether-TPU vorgesehen. Nach Extrusion werden die Lagen miteinander laminiert.

Vor Beschichtung bzw. mit der Funktionsschicht bzw. vor Extrusion werden die Polypropylenvliese im Prozess einer Corona-Vorbehandlung unterzogen und anschließend wird mittels einer Breitschlitzdüse ein aufgeschmolzener Klebstoff (Hotmelt-Klebstoff) aufgebracht. Die Klebstoffschicht wird auf der Trägerschicht (Polypropylenvlies) angeordnet.

Es ist kein flächendeckender Auftrag der Klebstoffschicht vorgesehen. Bereichsweise weist die Oberfläche der Trägerschicht Freiräume, die klebstofffrei sind, auf. Diese Freiräume sind allerdings nicht steuerbar bzw. undefiniert und werden durch die Breitschlitzdüse im kontinuierlichen Prozess bzw. bei kontinuierlicher Aufbringung des Klebstoffs durch "Aufreißen" hervorgerufen. Letztlich sind etwa 80% der Oberfläche der Trägerschicht mit Klebstoff bedeckt. Die Funktionsschicht wird durch den vorgenannten Aufbau zwischen zwei Polypropylenvliesen verklebt.

Vergleichsbeispiel 3 (erfindungsgemäß):
Zwischen zwei Polypropylenvliesen, die eine Grammatur von etwa 70 g/m² und 35 g/m² aufweisen, wird in einem Extrusionsprozess eine Funktionsschicht mit ca. 30 g/m² TPU auf die Polypropylenvliese eingebettet. Ein Laminieren des Schichtaufbaus der Verbundfolie ist vorgesehen.

Vor Anordnung der Funktionsschicht werden die Polypropylenvliese einer Corona-Vorbehandlung unterzogen. Nach der Corona-Vorbehandlung wird mittels einer Breitschlitzdüse ein aufgeschmolzener Klebstoff (Hotmelt-Klebstoff) aufgebracht.

Die Breitschlitzdüse weist voneinander beabstandete Öffnungen, insbesondere in Form kammartiger geschlossener und offener Segmente, auf, die derart ausgebildet sind, dass ein Auftrag der Klebstoffschicht in Längsstreifen in Längsrichtung der Trägerschicht erfolgt. Zwischen den offenen kammartigen Segmenten der Breitschlitzdüse, die die Düsenöffnungen der Düsenanordnung bilden, sind geschlossene kammartige Segmente angeordnet, aus denen kein Klebstoff austritt.

Der so hervorgerufene bereichsweise Auftrag der Klebstoffschicht in Längsstreifen bildet demgemäß einen definierten offenporigen (nicht flächendeckenden) Klebefilm. Auch ein "Aufreißen" der einzelnen Längsstreifen kann durch den kontinuierlichen Betrieb der Aufbringung der Klebstoffschicht durch die Breitschlitzdüse vorgesehen sein.

Es erfolgt ein Aufbringen der Klebstoffschicht auf die Trägerschicht und einer weiteren Klebstoffschicht auf die weitere Trägerschicht. In diesem Zusammenhang darf auf die vorherigen Ausführungen zum Auftrag der Klebstoffschichten in voneinander beabstandeten Längsstreifen in Längsrichtung der Trägerschicht verwiesen werden.

Die TPU-Funktionsschicht wird demzufolge zwischen zwei Polypropylenvliesen verklebt.

Zur Herstellung der so erhaltenen Verbundfolie wird das erfindungsgemäße Verfahren genutzt.

Die Auswertung der Vergleichsbeispiele ergibt folgendes:
Die gemäß den Vergleichsbeispielen 1 und 2 und dem Beispiel 3 (erfindungsgemäß) erhaltenen Verbundfolien werden hinsichtlich unterschiedlicher Eigenschaften analysiert.

Der sd-Wert, der die Wasserdampfdurchlässigkeit angibt, wird nach EN 12572 (Stand: Februar 2019) gemessen.

Die Verbundhaftung der einzelnen Lagen miteinander wird durch Schälprüfungen der erzeugten Muster gemessen. Eine Verbundhaftung der gealterten Muster (336 h QUV und 70 Tage 70°C) wird nach EN 13859-1 (Stand: Februar 2019) gemessen.

Die gealterten Muster sind dem QUV-Tester, einem Tester für beschleunigte Bewitterung, für ca. 336 h und für 70 Tage und zudem einer Temperatur von etwa 70°C ausgesetzt worden.

Es konnten die nachfolgenden Versuchsergebnisse ermittelt werden:

| | sd-Wert | Verbund haftung (Schälprüfung) | | Verbundhaftung (Schälprüfung) nach Alterung | |
|---|---|---|---|---|---|
| | | 70 g/m² Vlies zu TPU | 35 g/m² Vlies zu TPU | 70 g/m² Vlies zu TPU | 35 g/m² Vlies zu TPU |
| Einheit | [m] | [N/50 mm] | [N/50 mm] | [N/50 mm] | [N/50 mm] |
| Vergleichsbeispiel 1 | 0,05 | 2,1 | 1,9 | 1,1 | 0,8 |
| Vergleichsbeispiel 2 | 0,15 | 5,6 | 8,1 | 5,2 | 6,9 |
| Beispiel 3 | 0,09 | 3,7 | 3,5 | 3,4 | 3,3 |

Durch diese Versuchsergebnisse werden die erfindungsgemäßen Vorteile deutlich.

Im Vergleich zum Vergleichsbeispiel 2, das eine gute Verbundhaftung zeigt, kann durch den erfindungsgemäßen Auftrag der Klebstoffschicht bzw. der weiteren Klebstoffschicht (Beispiel 3) ein niedriger sd-Wert erhalten werden. Erfindungsgemäß konnte somit der sd-Wert von 0,15 m auf 0,09 m gesenkt werden.

Das Vergleichsbeispiel 1 weist zwar einen sehr niedrigen sd-Wert mit 0,05 m auf, allerdings ist die Verbundhaftung als mangelhaft zu beurteilen und nach Alterung auch nicht mehr ausreichend für einen dauerhaften Einsatz der Verbundfolie als Bauverbundfolie.

Erfindungsgemäß kann eine gute Verbundhaftung der geklebten Funktionsschicht erreicht werden, wobei gleichzeitig auch ein geringer sd-Wert sichergestellt werden kann.

Erfindungsgemäß kann zudem eine gute Verbundhaftung auch nach Alterung bei einem sehr niedrigen sd-Wert sichergestellt werden.

### Bezugszeichenliste:

- 1: Verbundfolie
- 2: Klebstoffschicht
- 3: Düsenanordnung
- 4: Trägerschicht
- 5: Funktionsschicht
- 6: Längsstreifen
- 7: Seite von 5
- 8: weitere Trägerschicht
- 9: weitere Klebstoffschicht
- 10: weitere Düsenanordnung
- 11: Abstand
- 12: Schichtaufbau
- 13: Oberfläche
- 14: Längsrand
- 15: Vorrichtung
- 16: erste Walze
- 17: zweite Walze
- 18: Düsenöffnungen
- 19: Breitschlitzdüse
- 20: Segmente von 19
- 21: Einzeldüsen
- 22: Walzenspalt
- 23: weiterer Walzenspalt
- 24: Stelleinrichtung
- 25: Extrusionseinrichtung
- 26: Streifen breite

- L: Längsrichtung
- F: Fördereinrichtung
- Q: Querrichtung

## Patentansprüche

1. Verfahren zur Herstellung einer wasserdampfdurchlässigen flächigen Verbundfolie (1), wobei eine Klebstoffschicht (2) mittels einer Düsenanordnung (3) auf eine Trägerschicht (4) aufgetragen wird und eine monolithische Funktionsschicht (5)auf die Klebstoffschicht (2) extrudiert wird, wobei als Material für die Funktionsschicht (5) thermoplastisches Polyurethan vorgesehen ist, wobei die Klebstoffschicht (2) mittels einer Mehrzahl von in Längsrichtung (L) der Trägerschicht (4) verlaufenden Längsstreifen (6) von der Düsenanordnung (3) aufgebracht wird, wobei sich die Längsrichtung (L) der Trägerschicht (4) in Förder- bzw. Produktionsrichtung der Verbundfolie (1) erstreckt, wobei benachbarte Längsstreifen (6) voneinander beabstandet sind.

2. Verfahren nach Anspruch 1, **dadurch gekennzeichnet, dass** auf die der Trägerschicht (4) abgewandten Seite (7) der Funktionsschicht (5) eine weitere Trägerschicht (8) aufgebracht wird, dass die Funktionsschicht (5) und die weitere Trägerschicht (8) mittels einer weiteren Klebstoffschicht (9) miteinander verbunden werden und dass die weitere Klebstoffschicht (9) mittels einer Mehrzahl von in Längsrichtung (L) der Trägerschicht (4) verlaufenden Längsstreifen (6) von einer weiteren Düsenanordnung (10) aufgebracht wird, wobei benachbarte Längsstreifen (6) voneinander beabstandet sind.

3. Verfahren nach Anspruch 1 oder 2, **dadurch gekennzeichnet, dass** die Düsenanordnung (3) und/oder die weitere Düsenanordnung (10) während des Aufbringens der Längsstreifen (6) quer zur Längsrichtung (L) der Trägerschicht (4) hin und her bewegt wird.

4. Verfahren nach einem der vorhergehenden Ansprüche, **dadurch gekennzeichnet, dass** der Klebstoff der Klebstoffschicht (2) und/oder der weiteren Klebstoffschicht (9) aufgeschäumt wird, vorzugsweise mittels eines Treibmittels, insbesondere Kohlenstoffdioxid.

5. Verfahren nach einem der vorhergehenden Ansprüche, **dadurch gekennzeichnet, dass** die Längsstreifen (6) der Klebstoffschicht (2) und die Längsstreifen (6) der weiteren Klebstoffschicht (9) derart aufgebracht werden, dass sie sich nach Herstellung der Verbundfolie (1) vollständig oder zumindest bereichsweise überlappen.

6. Verfahren nach einem der vorhergehenden Ansprüche, **dadurch gekennzeichnet, dass** die Trägerschicht (4) einer ersten Walze (16) zugeführt wird und/oder dass der Schichtaufbau wenigstens aus der Funktionsschicht (5), der Klebstoffschicht (2) und der Trägerschicht (4) nach der Extrusion verpresst wird und/oder dass der gepresste Verbund wenigstens aus der Trägerschicht (4), der Klebstoffschicht (2) und der Funktionsschicht (5) gekühlt wird.

7. Verfahren nach einem der vorhergehenden Ansprüche, **dadurch gekennzeichnet, dass** eine Corona-Vorbehandlung der Oberfläche (13) der Trägerschicht (4) und/oder der weiteren Trägerschicht (8) erfolgt, insbesondere wobei die Corona-Vorbehandlung der Trägerschicht (4) zeitlich vorgelagert zu der Extrusion der Funktionsschicht (5) und/oder der Aufbringung der Klebstoffschicht (2) erfolgt und/oder wobei die Corona-Vorbehandlung der weiteren Trägerschicht (8) vor Aufbringung der weiteren Klebstoffschicht (9) erfolgt.

## Claims

1. Method for producing a water vapour permeable flat composite film (1), wherein an adhesive layer (2) is applied to a carrier layer (4) by means of a nozzle arrangement (3) and a monolithic functional layer (5) is extruded onto the adhesive layer (2), wherein thermoplastic polyurethane is provided as the material for the functional layer (5), wherein the adhesive layer (2) is applied by the nozzle arrangement (3) by means of a plurality of longitudinal strips (6) running in the longitudinal direction (L) of the carrier layer (4), wherein the longitudinal direction (L) of the carrier layer (4) extends in the conveying and/or production direction of the composite film (1), wherein adjacent longitudinal strips (6) are spaced apart from one another.

2. Method according to claim 1, **characterized in that** a further carrier layer (8) is applied to the side (7) of the functional layer (5) facing away from the carrier layer (4), **in that** the functional layer (5) and the further carrier layer (8) are bonded to one another by means of a further adhesive layer (9), and **in that** the further adhesive layer (9) is applied by means of a plurality of longitudinal strips (6) running in the longitudinal direction (L) of the carrier layer (4) by a further nozzle arrangement (10), wherein adjacent longitudinal strips (6) are spaced apart from one another.

3. Method according to claim 1 or 2, **characterized in that** the nozzle arrangement (3) and/or the further nozzle arrangement (10) is moved back and forth transversely to the longitudinal direction (L) of the carrier layer (4) during the application of the longitudinal strips (6).

4. Method according to one of the preceding claims, **characterized in that** the adhesive of the adhesive layer (2) and/or the further adhesive layer (9) is foamed, preferably by means of a blowing agent, in particular carbon dioxide.

5. Method according to one of the preceding claims, **characterized in that** the longitudinal strips (6) of the adhesive layer (2) and the longitudinal strips (6) of the further adhesive layer (9) are applied in such a way that they overlap completely or at least in regions after production of the composite film (1).

6. Method according to any one of the preceding claims, **characterized in that** the carrier layer (4) is fed to a first roller (16) and/or that the layered composite of at least the functional layer (5), the adhesive layer (2) and the carrier layer (4) is pressed after extrusion and/or that the pressed composite of at least the carrier layer (4), the adhesive layer (2) and the functional layer (5) is cooled.

7. Method according to one of the preceding claims, **characterized in that** a corona pretreatment of the surface (13) of the carrier layer (4) and/or of the further carrier layer (8) is carried out, in particular wherein the corona pretreatment of the carrier layer (4) is carried out prior to the extrusion of the functional layer (5) and/or the application of the adhesive layer (2) and/or wherein the corona pretreatment of the further carrier layer (8) is carried out prior to the application of the further adhesive layer (9).

## Revendications

1. Procédé de fabrication d'un film composite plane (1) perméable à la vapeur d'eau, dans lequel une couche de colle (2) est appliquée sur une couche de support (4) au moyen d'un agencement de buses (3) et une couche fonctionnelle monolithique (5) est extrudée sur la couche de colle (2), dans lequel il est prévu comme matériau pour la couche fonctionnelle (5) du polyuréthane thermoplastique, dans lequel la couche de colle (2) est appliquée par l'agencement de buses (3) au moyen d'une pluralité de bandes longitudinales (6) s'étendant dans la direction longitudinale (L) de la couche de support (4), dans lequel la direction longitudinale (L) de la couche de support (4) s'étendant dans la direction de transport et/ou de fabrication du film composite (1), dans lequel les bandes longitudinales (6) voisines sont espacées les unes des autres.

2. Procédé selon la revendication 1, **caractérisé en ce qu'**une autre couche de support (8) est appliquée sur le côté (7) de la couche fonctionnelle (5) qui est opposé à la couche de support (4), **en ce que** la couche fonctionnelle (5) et l'autre couche de support (8) sont reliées entre elles au moyen d'une autre couche de colle (9) et **en ce que** l'autre couche de colle (9) est appliquée au moyen d'une pluralité de bandes longitudinales (6) s'étendant dans la direction longitudinale (L) de la couche de support (4) par un autre agencement de buses (10), des bandes longitudinales (6) voisines étant espacées les unes des autres.

3. Procédé selon la revendication 1 ou 2, **caractérisé en ce que** l' agencement de buses (3) et/ou l'autre agencement de buses (10) est déplacé en va-et-vient transversalement à la direction longitudinale (L) de la couche de support (4) pendant l'application des bandes longitudinales (6).

4. Procédé selon l'une des revendications précédentes, **caractérisé en ce que** la colle de la couche de colle (2) et/ou de l'autre couche de colle (9) est expansée, de préférence au moyen d'un agent moussant, en particulier du dioxyde de carbone.

5. Procédé selon l'une des revendications précédentes, **caractérisé en ce que** les bandes longitudinales (6) de la couche de colle (2) et les bandes longitudinales (6) de l'autre couche de colle (9) sont appliquées de telle sorte qu'elles se chevauchent complètement ou au moins par zones après la fabrication du film composite (1).

6. Procédé selon l'une des revendications précédentes, **caractérisé en ce que** la couche de support (4) est amenée à un premier rouleau (16) et/ou **en ce que** la structure stratifiée constituée au moins de la couche fonctionnelle (5), de la couche de colle (2) et de la couche de support (4) est comprimée après l'extrusion et/ou **en ce que** le composite comprimé constitué au moins de la couche de support (4), de la couche de colle (2) et de la couche fonctionnelle (5) est refroidi.

7. Procédé selon l'une des revendications précédentes, **caractérisé en ce qu'**un prétraitement corona de la surface (13) de la couche de support (4) et/ou de l'autre couche de support (8) est effectué, en particulier le prétraitement corona de la couche de support (4) étant effectué avant l'extrusion de la couche fonctionnelle (5) et/ou l'application de la couche de colle (2) et/ou le prétraitement corona de l'autre couche de support (8) étant effectué avant l'application de l'autre couche de colle (9).
